# EUROPEAN PATENT APPLICATION

(11) **EP 4 745 892 A1**
(43) Date of publication of application: **20.05.2026**
(21) Application number: 25210936.8
(22) Date of filing: 24.10.2025
(51) Int. Cl.: G06T 7/80, G06T 7/70, G06T 5/80, B22F 10/31, B22F 10/28, B22F 12/90

(54) **SCANNER CALIBRATION USING HIGH RESOLUTION IMAGING PROCESS MONITORING SYSTEM FOR ADDITIVE MANUFACTURING**

(30) Priority: 18.11.2024 US 202418951002
(71) Applicant: General Electric Company, Cincinnati, Ohio 45215 (US)
(72) Inventor: OSTROVERKHOV, Victor, Niskayuna, 12309-1027 (US); KENNY, Kevin B., Niskayuna, 12309-1027 (US); Immer, Christopher D., Niskayuna, 12309-1027 (US); ADCOCK, Thomas C., Niskayuna, 12309-1027 (US)
(74) Representative: Hafner & Kohl PartmbB

(57) **Abstract**

A system (100) includes an apparatus (130) for building a component by additive manufacturing, a camera (136), and a computing device (156). When the computing device (156) receives an image (600) of the build plane (112) captured by the camera (136), the image (600) includes a fiducial marker (602) positioned on the build plane (112). The computing device (156) rectifies the image (600) to generate a distortion-corrected image (604), and identifies the coordinates of the fiducial marker (602) in the distortion-corrected image (604). The computing device (156) then compares identified coordinates of the at least one fiducial marker (602) from the distortion-corrected image (604) with corresponding nominal coordinates of the at least one fiducial marker (602) in a coordinate system of the apparatus (130), and generates a coordinate transfer function based on a result of the comparison. The computing device (156) then applies the coordinate transfer function to the apparatus (130) to calibrate a position of the energy beam (132) on the build plane (112).

## Description

### FIELD

The present disclosure relates to additive manufacturing, and more specifically, to a high resolution imaging process monitoring system for additive manufacturing.

### BACKGROUND

At least some additive manufacturing systems involve the buildup of a metal component to make a net, or near net shape component. These systems produce complex components from expensive materials at a reduced cost and with improved manufacturing efficiency. Some known additive manufacturing systems, such as Direct Metal Laser Melting (DMLM), Selective Laser Sintering (SLS), Direct Metal Laser Sintering (DMLS), Selective Laser Melting (SLM) and LaserCusing^{®} systems, fabricate components using a focused energy source, such as a laser device or an electron beam generator, and a particulate, such as a powdered metal.

In some known additive manufacturing systems, component quality is reduced due to excess heat and/or variation in heat being transferred to the metal powder by the focused energy source within the melt pool. For example, sometimes local overheating occurs, particularly at overhangs. In addition, in some known additive manufacturing systems, component surface quality, particularly at overhangs or downward facing surfaces, is reduced due to the variation in conductive heat transfer between the powdered metal and the surrounding solid material of the component. For example, the melt pool produced by the focused energy source sometimes becomes too large resulting in the melted metal spreading into the surrounding powdered metal as well as the melt pool penetrating deeper into the powder bed, pulling in additional powder into the melt pool. The increased melt pool size and depth, and the flow of molten metal result in a poor surface finish of the overhang or downward facing surface.

In addition, in some known additive manufacturing systems, the component's dimensional accuracy and small feature resolution is reduced due to melt pool variations because of the variability of thermal conductivity of the subsurface structures and metallic powder. As the melt pool size varies, the accuracy of printed structures varies, especially at the edges of features.

### BRIEF DESCRIPTION OF THE DRAWINGS

FIG. 1 schematically depicts an example additive manufacturing system including an example imaging device, according to one or more embodiments shown and described herein;
FIG. 2 schematically depicts the memory modules of the computing device of FIG. 1, according to one or more embodiments shown and described herein;
FIG. 3 depicts an example image that may be captured by the imaging device of FIG. 1, according to one or more embodiments shown and described herein;
FIG. 4 depicts a composite in-weld image that may be generated by the imaging device of FIG. 1, according to one or more embodiments shown and described herein;
FIG. 5 depicts a flow diagram of an illustrative method for operating the computing device of FIG. 1, according to one or more embodiments shown and described herein;
FIG. 6 depicts an example image that may be captured by the imaging device of FIG. 1, according to one or more embodiments shown and described herein;
FIG. 7 depicts a distortion-corrected version of the example image of FIG. 6, according to one or more embodiments shown and described herein;
FIG. 8 depicts a flow diagram of an illustrative method for operating the computing device of FIG. 1, according to one or more embodiments shown and described herein;
FIG. 9 depicts a flow diagram of an illustrative method for operating the computing device of FIG. 1, according to one or more embodiments shown and described herein;
FIG. 10 schematically depicts an example additive manufacturing system including an example imaging device, according to one or more embodiments shown and described herein;
FIG. 11 depicts an example image that may be captured by a first imaging device of FIG. 10, according to one or more embodiments shown and described herein;
FIG. 12 depicts an example image that may be captured by a second imaging device of FIG. 10, according to one or more embodiments shown and described herein;
FIG. 13 depicts an example merged image of the images of FIGS. 11 and 12, according to one or more embodiments shown and described herein; and
FIG. 14 depicts a flow diagram of an illustrative method for operating the computing device of FIG. 10, according to one or more embodiments shown and described herein.

### DETAILED DESCRIPTION

The following disclosure provides many different embodiments, or examples, for implementing different features of the provided subject matter. Specific examples of components and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

In the following description, certain specific details are set forth in order to provide a thorough understanding of various embodiments of the disclosure. However, one skilled in the art will understand that the disclosure may be practiced without these specific details. In other instances, well-known structures associated with electronic components and fabrication techniques have not been described in detail to avoid unnecessarily obscuring the descriptions of the embodiments of the present disclosure.

Unless the context requires otherwise, throughout the specification and claims that follow, the word "comprise" and variations thereof, such as "comprises" and "comprising," are to be construed in an open, inclusive sense, that is, as "including, but not limited to."

The use of ordinals such as first, second and third does not necessarily imply a ranked sense of order, but rather may only distinguish between multiple instances of an act or structure.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

As used in this specification and the appended claims, the singular forms "a," "an," and "the" include plural referents unless the content clearly dictates otherwise. It should also be noted that the term "or" is generally employed in its sense including "and/or" unless the content clearly dictates otherwise.

Numerical values in the specification and claims of this application should be understood to include numerical values which are the same when reduced to the same number of significant figures and numerical values which differ from the stated value by less than the experimental error of conventional measurement technique of the type described in the present application to determine the value. All ranges disclosed herein are inclusive of the recited endpoint.

The term "about" can be used to include any numerical value that can vary without changing the basic function of that value. When used with a range, "about" also discloses the range defined by the absolute values of the two endpoints, e.g. "about 2 to about 4" also discloses the range "from 2 to 4." The term "about" may refer to plus or minus 10% of the indicated number.

As used herein, the term "field of view" refers to the extent of an object that an imaging device captures in an image.

As described in detail below, example embodiments of the present subject matter involve the use of additive manufacturing machines or methods. As used herein, the terms "additively manufactured" or "additive manufacturing techniques or processes" refer generally to manufacturing processes wherein successive layers of material(s) are provided on each other to "build-up," layer-by-layer, a three-dimensional component. The successive layers generally fuse together to form a monolithic component which may have a variety of integral sub-components.

Suitable additive manufacturing techniques in accordance with the present disclosure include, for example, Fused Deposition Modeling (FDM), Selective Laser Sintering (SLS), 3D printing such as by inkjets and laserjets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), photo-polymerization based additive processes, extrusion based processes, directed energy deposition processes, and other known processes.

In addition to using a direct metal laser sintering (DMLS) or direct metal laser melting (DMLM) process where an energy source is used to selectively sinter or melt portions of a layer of powder, it should be appreciated that according to alternative embodiments, the additive manufacturing process may be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent may be, for example, a photo-curable polymer or another liquid bonding agent. Other suitable additive manufacturing methods and variants are intended to be within the scope of the present subject matter.

The additive manufacturing processes described herein may be used for forming components using any suitable material. For example, the material may be plastic, metal, concrete, ceramic, polymer, epoxy, photopolymer resin, or any other suitable material that may be in solid, liquid, powder, sheet material, wire, or any other suitable form. More specifically, according to example embodiments of the present subject matter, the additively manufactured components described herein may be formed in part, in whole, or in some combination of materials including but not limited to pure metals, nickel alloys, chrome alloys, titanium, titanium alloys, magnesium, magnesium alloys, aluminum, aluminum alloys, iron, iron alloys, stainless steel, and nickel or cobalt based superalloys (e.g., those available under the name Inconel^{®} available from Special Metals Corporation). These materials are examples of materials suitable for use in the additive manufacturing processes described herein, and may be generally referred to as "additive materials."

In addition, one skilled in the art will appreciate that a variety of materials and methods for bonding those materials may be used and are contemplated as within the scope of the present disclosure. As used herein, references to "fusing" may refer to any suitable process for creating a bonded layer of any of the above materials. For example, if an object is made from polymer, fusing may refer to creating a thermoset bond between polymer materials. If the object is epoxy, the bond may be formed by a crosslinking process. If the material is ceramic, the bond may be formed by a sintering process. If the material is powdered metal, the bond may be formed by a melting or sintering process. One skilled in the art will appreciate that other methods of fusing materials to make a component by additive manufacturing are possible, and the presently disclosed subject matter may be practiced with those methods.

In addition, the additive manufacturing process disclosed herein allows a single component to be formed from multiple materials. Thus, the components described herein may be formed from any suitable mixtures of the above materials. For example, a component may include multiple layers, segments, or parts that are formed using different materials, processes, and/or on different additive manufacturing machines. In this manner, components may be constructed that have different materials and material properties for meeting the demands of any particular application. In addition, although the components described herein are constructed entirely by additive manufacturing processes, it should be appreciated that in alternate embodiments, all or a portion of these components may be formed via casting, machining, and/or any other suitable manufacturing process. Indeed, any suitable combination of materials and manufacturing methods may be used to form these components.

An example additive manufacturing process will now be described. Additive manufacturing processes fabricate components using three-dimensional (3D) information, for example a three-dimensional computer model, of the component. Accordingly, a three-dimensional design model of the component may be defined prior to manufacturing. In this regard, a model or prototype of the component may be scanned to determine the three-dimensional information of the component. As another example, a model of the component may be constructed using a suitable computer aided design (CAD) program to define the three-dimensional design model of the component.

The design model may include 3D numeric coordinates of the entire configuration of the component including both external and internal surfaces of the component. For example, the design model may define the body, the surface, and/or internal passageways such as openings, support structures, etc. In one example embodiment, the three-dimensional design model is converted into a plurality of slices or segments, e.g., along a central (e.g., vertical) axis of the component or any other suitable axis. Each slice may define a thin cross section of the component for a predetermined height of the slice. The plurality of successive cross-sectional slices together form the 3D component. The component is then "built-up" slice-by-slice, or layer-by-layer, until finished.

In this manner, the components described herein may be fabricated using the additive process, or more specifically each layer is successively formed, e.g., by fusing or polymerizing a plastic using laser energy or heat or by sintering or melting metal powder. For example, a particular type of additive manufacturing process may use an energy beam, for example, an electron beam or electromagnetic radiation such as a laser beam, to sinter or melt a powder material. Any suitable laser and laser parameters may be used, including considerations with respect to power, laser beam spot size, and scanning velocity. The build material may be formed by any suitable powder or material selected for enhanced strength, durability, and useful life, particularly at high temperatures.

Each successive layer may be, for example, between about 10 µm and 200 µm, although the thickness may be selected based on any number of parameters and may be any suitable size according to alternative embodiments. Therefore, utilizing the additive formation methods described above, the components described herein may have cross sections as thin as one thickness of an associated powder layer, e.g., 10 µm, utilized during the additive formation process.

In addition, utilizing an additive process, the surface finish and features of the components may vary as needed depending on the application. For example, the surface finish may be adjusted (e.g., made smoother or rougher) by selecting appropriate laser scan parameters (e.g., laser power, scan speed, laser focal spot size, etc.) during the additive process, especially in the periphery of a cross-sectional layer that corresponds to the part surface. For example, a rougher finish may be achieved by increasing laser scan speed or decreasing the size of the melt pool formed, and a smoother finish may be achieved by decreasing laser scan speed or increasing the size of the melt pool formed. The scanning pattern and/or laser power can also be changed to change the surface finish in a selected area.

After fabrication of the component is complete, various post-processing procedures may be applied to the component. For example, post processing procedures may include removal of excess powder by, for example, blowing or vacuuming. Other post processing procedures may include a stress relief process. Additionally, thermal, mechanical, and/or chemical post processing procedures can be used to finish the part to achieve a desired strength, surface finish, and other component properties or features.

Notably, in example embodiments, several aspects and features of the present subject matter were previously not possible due to manufacturing constraints. However, the present inventors have advantageously utilized current advances in additive manufacturing techniques to improve various components and the method of additively manufacturing such components. While the present disclosure is not limited to the use of additive manufacturing to form these components generally, additive manufacturing does provide a variety of manufacturing advantages, including ease of manufacturing, reduced cost, greater accuracy, etc.

Also, the additive manufacturing methods described above provide for much more complex and intricate shapes and contours of the components described herein to be formed with a very high level of precision. For example, such components may include thin additively manufactured layers, cross sectional features, and component contours. In addition, the additive manufacturing process enables the manufacture of a single component having different materials such that different portions of the component may exhibit different performance characteristics. The successive, additive nature of the manufacturing process enables the construction of these novel features. As a result, components formed using the methods described herein may exhibit improved performance and reliability.

The systems and methods described herein relate to additive manufacturing systems, such as Direct Metal Laser Melting (DMLM) systems. The embodiments described herein include a focused energy source and an imaging device. During operation of the focused energy source, the imaging device may continually capture a video stream of images at a relatively high frame rate. During each exposure, a part of the melt pool trajectory may be captured. After capturing a plurality of images during the build of an entire layer, the images may be stacked together to generate a composite image frame for the layer, as disclosed herein. The composite image illustrates intensity of light emitted throughout the melt pool. The composite image may be inspected to determine variations and defects in the additive manufacturing process. As a result, errors in the additive manufacturing process may be corrected and the process may be improved. In some embodiments, the composite image may be used in a feed-forward process to improve the manufacturing of subsequent components.

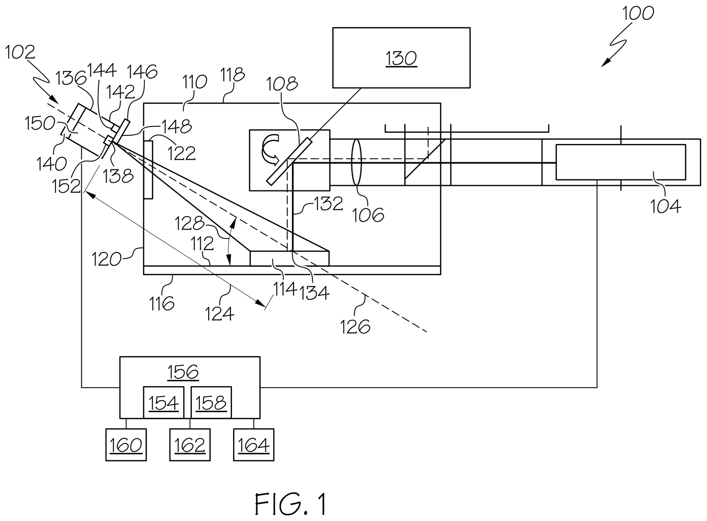

FIG. 1 is a schematic view of an exemplary additive manufacturing system 100 including an imaging device 102. In the exemplary embodiment, the additive manufacturing system 100 is a direct metal laser melting (DMLM) system. The additive manufacturing system 100 further includes a focused energy source 104 optically coupled to optics 106 and galvanometers 108 for controlling the scanning of focused energy source 104. In the exemplary embodiment, the focused energy source 104 is a laser device. In alternative embodiments, the additive manufacturing system 100 may include any focused energy sources 104 that enable the additive manufacturing system 100 to operate as described herein. For example, in some embodiments, the additive manufacturing system 100 has a first focused energy source 104 having a first power and a second focused energy source 104 having a second power different from the first power. In further embodiments, the additive manufacturing system 100 has at least two focused energy sources 104 having substantially the same power output. In further embodiments, the additive manufacturing system 100 includes at least one focused energy source 104 that is an electron beam generator.

In the exemplary embodiment, the additive manufacturing system 100 further includes a housing 110 defining a build plane 112 configured to hold a particulate 114. The housing 110 includes a bottom wall 116 defining the build plane 112, a top wall 118 opposite bottom wall 116, and a sidewall 120 at least partially extending between bottom wall 116 and top wall 118. In alternative embodiments, the housing 110 includes any walls and surfaces that enable the additive manufacturing system 100 to operate as described herein. In the exemplary embodiment, the sidewall 120 defines a viewport 122 therein. In alternative embodiments, the viewport 122 is defined by any portion of the housing 110 that enables the additive manufacturing system 100 to operate as described herein. For example, in some embodiments, the viewport 122 is at least partially defined by the top wall 118. In further embodiments, the housing 110 defines a plurality of viewports 122.

In the exemplary embodiment, the imaging device 102 is positioned adjacent the viewport 122 on an exterior of the housing 110. An image axis 126 extends between the imaging device 102 and particulate 114 on the build plane 112. Accordingly, in the exemplary embodiment, the image axis 126 extends through the viewport 122. The imaging device 102 is spaced a distance 124 from the build plane 112 measured along the image axis 126. In particular, the image axis 126 extends through an aperture 148 of the imaging device 102. In some embodiments, the distance 124 is in a range of 15 centimeters (cm) (6 inches (in.)) and about 152 cm (60 in.). In further embodiments, the distance 124 is in a range of 30 cm (12 in.) and about 91 mm (36 in.). In the exemplary embodiment, the distance 124 is approximately 61 cm (24 in.) In alternative embodiments, the imaging device 102 is spaced any distance 124 from the build plane 112 that enables the imaging device 102 to operate as described herein. In the exemplary embodiment, the image axis 126 forms an angle 128 with the build plane 112. In some embodiments, the image axis 126 and the build plane 112 form an angle 128 in a range of 70° and about 40°. In further embodiments, the image axis 126 and the build plane 112 form an angle 128 in a range of 80° and about 20°. In the exemplary embodiment, the image axis 126 and the build plane 112 form an angle 128 of approximately 45°. In alternative embodiments, the angle 128 is any angle that enables the imaging device 102 to operate as described herein.

In the exemplary embodiment, the field of view of the imaging device 102 is in reference to the build plane 112 and depends on the position and orientation of the imaging device 102 in relation to the build plane 112. The field of view of the imaging device 102 may be adjusted by adjusting components of the imaging device 102, such as optics, and the distance 124 between the build plane 112 and the imaging device 102. In the exemplary embodiment, the imaging device 102 has a field of view of the build plane 112 of approximately 250 millimeters (mm)×250 mm. In alternative embodiments, the imaging device 102 may have any field of view that enables the imaging device 102 to operate as described herein. For example, in some embodiments, the imaging device 102 is disposed adjacent the top wall 118 and has a field of view of the build plane 112 of approximately 250 mm×280 mm. In further embodiments, a plurality of imaging devices 102 are used to a create a field of view sufficient to cover a larger build plane 112 without substantially reducing resolution.

In the exemplary embodiment, the additive manufacturing system 100 also includes a computer control system, or electronic control unit (ECU) 130. Galvanometers 108 are controlled by the ECU 130 and deflect an energy beam 132 (e.g., a laser beam) from focused energy source 104 along a predetermined path on the build plane 112. In some embodiments, the galvanometers 108 include two-dimension (2D) scan galvanometers, three-dimension (3D) scan galvanometers, dynamic focusing galvanometers, and/or any other galvanometer system that deflect the energy beam 132 of focused energy source 104. In alternative embodiments, the galvanometers 108 deflect a plurality of energy beams 132 along at least one predetermined path.

The additive manufacturing system 100 is operated to fabricate a component 134 by a layer-by-layer manufacturing process. The component 134 is fabricated from an electronic representation of the 3D geometry of the component 134. In some embodiments, the electronic representation is produced in a computer aided design (CAD) or similar file. In alternative embodiments, the electronic representation is any electronic representation that enables the additive manufacturing system 100 to operate as described herein. In the exemplary embodiment, the CAD file of the component 134 is converted into a layer-by-layer format that includes a plurality of build parameters for each layer. In the exemplary embodiment, the component 134 is arranged electronically in a desired orientation relative to the origin of the coordinate system used in the additive manufacturing system 100. The geometry of the component 134 is sliced into a stack of layers of a desired thickness, such that the geometry of each layer is an outline of the cross-section through the component 134 at that particular layer location. A "toolpath" or "toolpaths" are generated across the geometry of a respective layer. The build parameters are applied along the toolpath or toolpaths to fabricate that layer of the component 134 from the material used to construct the component 134. The steps are repeated for each respective layer of the component 134 geometry. Once the process is completed, an electronic computer build file (or files) is generated including the layers. The build file is loaded into the ECU 130 of the additive manufacturing system 100 to control the system during fabrication of each layer.

After the build file is loaded into the ECU 130, the additive manufacturing system 100 is operated to generate the component 134 by implementing the layer-by-layer manufacturing process, such as a DMLM method. The exemplary layer-by-layer additive manufacturing process does not use a pre-existing article as the precursor to the final component, rather the process produces the component 134 from a raw material in a configurable form, such as the particulate 114. For example, without limitation, a steel component is additively manufactured using a steel powder. The additive manufacturing system 100 enables fabrication of components using a broad range of materials, for example, without limitation, metals, ceramics, and polymers. In alternative embodiments, DMLM fabricates components from any materials that enable the additive manufacturing system 100 to operate as described herein.

As used herein, the term "parameter" refers to characteristics that are used to define the operating conditions of the additive manufacturing system 100, such as a power output of the focused energy source 104, a vector scanning speed of the focused energy source 104, a raster power output of the focused energy source 104, a raster scanning speed of the focused energy source 104, a raster tool path of the focused energy source 104, and a contour power output of the focused energy source 104 within the additive manufacturing system 100. In some embodiments, the parameters are initially input by a user into the ECU 130. The parameters represent a given operating state of the additive manufacturing system 100. In general, during raster scanning, the energy beam 132 is scanned sequentially along a series of substantially straight lines spaced apart and parallel to each other. During vector scanning, the energy beam 132 is generally scanned sequentially along a series of substantially straight lines or vectors, where the orientations of the vectors relative to each other sometimes varies. In general, the ending point of one vector coincides with the beginning point of the next vector. Vector scanning is generally used to define the outer contours of a component, whereas raster scanning is generally used to "fill" the spaces enclosed by the contour, where the component is solid.

In the exemplary embodiment, the imaging device 102 includes a camera 136 including a tilt-shift lens 138, a sensor 140, a casing 142, an adjustable optical attenuator 144, and a shutter 146. In the illustrated example, the camera 136 comprises a complementary metal-oxide-semiconductor (CMOS) camera. However, in other examples, other types of camera may be used. The casing 142 defines the aperture 148 for light to enter an interior space 150 defined by the casing 142. The tilt-shift lens 138, the adjustable optical attenuator 144, and the shutter 146 are disposed adjacent the aperture 148. The tilt-shift lens 138 directs and focuses light onto the sensor 140, which is disposed in the interior space 150. The tilt-shift lens 138 may improve the sharpness of images captured by the camera 136 and optimize lens performance and focus condition at an oblique incidence. The adjustable optical attenuator 144 changes the light collecting efficiency of the camera 136, as disclosed in further detail below. In alternative embodiments, the camera 136 may include any components that enable the imaging device 102 to operate as described herein. In some examples, a fixed attenuator may be used rather than the adjustable optical attenuator 144.

In embodiments, the shutter 146 is positionable between an open position that allows light to travel through the aperture 148 and a closed position that inhibits light traveling through the aperture 148. In embodiments, the imaging device 102 includes a light source 152 to illuminate the build plane. In the illustrated example, the light source 152 is a light-emitting diode (LED). However, in other examples, other types of light sources may be used to illuminate the build plane 112. In particular, the light source 152 may illuminate the build plane 112 at the start of a build layer so that the camera 136 can capture a pre-weld image before the energy beam 132 is emitted from the focused energy source 104. The light source 152 may also illuminate the build plane 112 at the end of a build layer after the energy beam 132 from the focused energy source 104 is turned off so that the camera 136 can capture a post-weld image.

During operation of the imaging device 102, the shutter 146 is positioned in the open position such that light is allowed to travel through the aperture 148 and strike the sensor 140. The light activates the sensor 140 and is converted to electronic signals. In the exemplary embodiment, the sensor 140 includes a plurality of pixels (not shown) that are activated by light. In alternative embodiments, the sensor 140 is any sensor that enables the imaging device 102 to operate as described herein. In the exemplary embodiment, the image is transmitted to a processor 154 coupled to camera 136. In some embodiments, the processor 154 is configured to recognize differences in light intensity in the image.

In the exemplary embodiment, the ECU 130 is any controller typically provided by a manufacturer of the additive manufacturing system 100 to control operation of the additive manufacturing system 100. In some embodiments, the ECU 130 is a computer system that includes at least one processor (not shown) and at least one memory device (not shown). In some embodiments, the ECU 130 includes, for example, a 3D model of the component 134 to be fabricated by the additive manufacturing system 100. In some embodiments, the ECU 130 executes operations to control the operation of the additive manufacturing system 100 based at least partially on instructions from human operators. Operations executed by the ECU 130 include controlling power output of the focused energy source 104 and adjusting the galvanometers 108 to control the scanning speed of the focused energy source 104 within the additive manufacturing system 100.

In the exemplary embodiment, a computing device 156 is coupled to the imaging device 102 and the focused energy source 104. The computing device 156 includes a memory device 158 and the processor 154 coupled to the memory device 158. In some embodiments, the processor 154 includes one or more processing units, such as, without limitation, a multi-core configuration. In the exemplary embodiment, the processor 154 includes a field programmable gate array (FPGA). Alternatively, the processor 154 may be any type of processor that permits the computing device 156 to operate as described herein. In some embodiments, executable instructions are stored in the memory device 158. The computing device 156 is configurable to perform one or more operations described herein by programming the processor 154. For example, the processor 154 may be programmed by encoding an operation as one or more executable instructions and providing the executable instructions in the memory device 158. In the exemplary embodiment, the memory device 158 is one or more devices that enable storage and retrieval of information such as executable instructions or other data. In some embodiments, the memory device 158 includes one or more computer readable media, such as, without limitation, random access memory (RAM), dynamic RAM, static RAM, a solid-state disk, a hard disk, read-only memory (ROM), erasable programmable ROM, electrically erasable programmable ROM, or non-volatile RAM memory. The above memory types are exemplary only, and are thus not limiting as to the types of memory usable for storage of a computer program.

In some embodiments, the memory device 158 is configured to store build parameters including, without limitation, real-time and historical build parameter values, or any other type of data. In the exemplary embodiment, the memory device 158 stores images generated by the imaging device 102. In alternative embodiments, the memory device 158 stores any data that enables the additive manufacturing system 100 to operate as described herein. In some embodiments, the processor 154 removes or "purges" data from the memory device 158 based on the age of the data. For example, the processor 154 overwrites previously recorded and stored data associated with a subsequent time or event. In addition, or alternatively, the processor 154 removes data that exceeds a predetermined time interval. In addition, the memory device 158 includes, without limitation, sufficient data, algorithms, and commands to facilitate monitoring and measuring of build parameters and the geometric conditions of the component 134 fabricated by the additive manufacturing system 100.

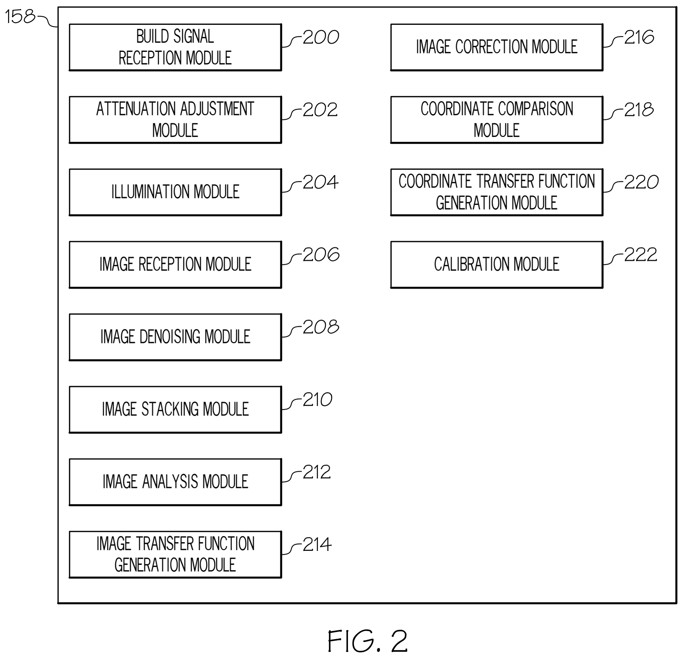

The memory device 158 may also store one or more memory modules storing instructions that may be executed by the processor 154. Each of the memory modules stored in the memory device may be a program module in the form of operating systems, application program modules, and other program modules. Such a program module may include, but is not limited to, routines, subroutines, programs, objects, components, data structures and the like for performing specific tasks or executing specific data types as will be described below with respect to FIG. 2.

In some embodiments, the computing device 156 includes a presentation interface 160 coupled to the processor 154. The presentation interface 160 presents information, such as images generated by the imaging device 102, to a user. In one embodiment, the presentation interface 160 includes a display adapter (not shown) coupled to a display device (not shown), such as a cathode ray tube (CRT), a liquid crystal display (LCD), an organic LED (OLED) display, or an "electronic ink" display. In some embodiments, the presentation interface 160 includes one or more display devices. In addition, or alternatively, the presentation interface 160 includes an audio output device (not shown), for example, without limitation, an audio adapter or a speaker (not shown).

In some embodiments, the computing device 156 includes a user input interface 162. In the exemplary embodiment, the user input interface 162 is coupled to the processor 154 and receives input from the user. In some embodiments, the user input interface 162 includes, for example, without limitation, a keyboard, a pointing device, a mouse, a stylus, a touch sensitive panel, such as, without limitation, a touch pad or a touch screen, and/or an audio input interface, such as, without limitation, a microphone. In further embodiments, a single component, such as a touch screen, functions as both a display device of the presentation interface 160 and the user input interface 162.

In the exemplary embodiment, a communication interface 164 is coupled to the processor 154 and is configured to be coupled in communication with one or more other devices, such as the imaging device 102, and to perform input and output operations with respect to such devices while performing as an input channel. For example, in some embodiments, the communication interface 164 includes, without limitation, a wired network adapter, a wireless network adapter, a mobile telecommunications adapter, a serial communication adapter, or a parallel communication adapter. The communication interface 164 receives a data signal from or transmits a data signal to one or more remote devices. For example, in an alternative embodiment, the communication interface 164 of the computing device 156 communicates with the ECU 130.

The presentation interface 160 and the communication interface 164 are both capable of providing information suitable for use with the methods described herein, such as, providing information to the user or the processor 154. Accordingly, the presentation interface 160 and the communication interface 164 are referred to as output devices. Similarly, the user input interface 162 and the communication interface 164 are capable of receiving information suitable for use with the methods described herein and are referred to as input devices.

In reference to FIG. 1, an exemplary method of manufacturing the component 134 using the additive manufacturing system 100 includes depositing a first layer of particulate 114 on the build plane 112. The shutter 146 of imaging device 102 is moved to the open position and maintained in the open position. In some embodiments, the shutter 146 is maintained in the open position for longer than 1 minute. In the exemplary embodiment, the shutter 146 is maintained in the open position for a period of time in a range of 1 minute and about 10 minutes. In alternative embodiments, the shutter 146 is maintained in the open position for any period of time that enables the imaging device 102 to operate as described herein.

In the exemplary embodiment, the energy beam 132 is directed toward the first layer of the particulate 114 on the build plane 112 and the particulate 114 is heated to a melting point. The particulate 114 at least partially melts to form a melt pool, which emits light. In some embodiments, the ECU 130 controls the additive manufacturing system 100 to direct the energy beam 132 from the focused energy source 104 towards the particulate 114. The ECU 130 controls the movement of the galvanometers 108 to scan the energy beam 132 across the particulate 114 on the build plane 112 according to a predetermined path defined by the build file for the component 134 to form a melt path. The camera 136 is positioned having a line of sight on the build plane 112 such that the field of view of the camera 136 encompasses a portion of the melt path. In the exemplary embodiment, light from the melt pool travels through the aperture 148 and strikes the sensor 140 while the shutter 146 is maintained in the open position. In some embodiments, a second layer of particulate 114 is deposited on the build plane 112 and the second layer of particulate 114 is heated by the energy beam 132. The camera 136 may capture a plurality of images during operation of the additive manufacturing system 100 as discussed below with respect to FIG. 2.

Turning now to FIG. 2, the memory modules stored in the memory device 158 are schematically depicted. The memory modules include a build signal reception module 200, an attenuation adjustment module 202, an illumination module 204, an image reception module 206, an image denoising module 208, an image stacking module 210, an image analysis module 212, an image transfer function generation module 214, an image correction module 216, a coordinate comparison module 218, a coordinate transfer function generation module 220, and a calibration module 222.

The build signal reception module 200 may receive signals from the ECU 130 (FIG. 1) at different stages of operation of the additive manufacturing system 100 (FIG. 1). This information may be used by the imaging device 102 (FIG. 1) such that the camera 136 (FIG. 1) may capture different types of images. In particular, the camera 136 may capture three types of images of the component 134 (FIG. 1) as it is being built by the additive manufacturing system 100 at different stages of the build.

The camera 136 may capture a pre-weld image of the build plane 112 (FIG. 1) after the particulate 114 (FIG. 1) has been applied but before the energy beam 132 (FIG. 1) is applied. The pre-weld image may capture powder spreading quality. The camera 136 (FIG. 1) may also capture an in-weld image while the energy beam 132 (FIG. 1) is scanned across the particulate 114 (FIG. 1) on the build plane 112 (FIG. 1). The in-weld image may be formed from a stack of images captured while the energy beam 132 (FIG. 1) is on, as disclosed in further detail below. The in-weld image may capture the melt pool trajectory during the exposure of the energy beam 132 (FIG. 1). Lastly, the camera 136 (FIG. 1) may capture a post-weld image of the component layer after the exposure of the energy beam 132 (FIG. 1). The post-weld image may capture an image of a current layer of the component 134 (FIG. 1) after the layer has been completed. These three images may be analyzed by a user or computer algorithm to determine whether the additive manufacturing system 100 (FIG. 1) is functioning properly.

In order for the imaging device 102 to capture the three types of images discussed above, the build signal reception module 200 may receive, from the ECU 130, an indication of the different phases of a build. In particular, when the particulate 114 has been deposited on the build plane 112, but before the particulate 114 is exposed to the energy beam 132, the ECU 130 may transmit a "powder applied" signal to the computing device 156 (FIG. 1). When this signal is received by the build signal reception module 200, the camera 136 may capture the pre-weld image, as discussed in further detail below. When the focused energy source 104 begins emitting the energy beam 132, the ECU 130 may transmit a "weld on" signal to the computing device 156. When this signal is received by the build signal reception module 200, the camera 136 may begin the process of capturing the in-weld image, as discussed in further detail below. When the focused energy source 104 turns off the energy beam 132, after a build layer is complete, the ECU 130 may transmit a "weld off" signal to the computing device 156. When this signal is received by the build signal reception module 200, the camera 136 may capture the post-weld image, as discussed in further detail below.

Referring still to FIG. 2, the attenuation adjustment module 202 may adjust the adjustable optical attenuator 144 (FIG. 1), as disclosed herein. As discussed above, the camera 136 may capture a pre-weld image of the build plane 112 before exposure to the energy beam 132, an in-weld image of the build plane 112 during exposure to the energy beam 132, and a post-weld image after exposure to the energy beam 132. As such, the pre-weld and post-weld images are captured when the focused energy source 104 (FIG. 1) is not emitting the energy beam 132, and the in-weld image is captured when the focused energy source 104 is emitting the energy beam 132. Thus, the in-weld image is captured under dramatically different lighting conditions than the pre-weld and post-weld images.

In particular, a large amount of light from the energy beam 132 passes through the aperture 148 while the in-weld image is captured, while no light from the energy beam 132 passes through the aperture 148 while the pre-weld and post-weld images are captured. As such, if no adjustment is made to the amount of light entering the camera 136 during each of these three phases, the camera 136 has a very large dynamic range in order to capture both the pre-weld and post-weld images, and the in-weld image. This may be a difficult task for the camera 136, and as such, the adjustable optical attenuator 144 may adjust the amount of light received by the camera 136.

In particular, after the build signal reception module 200 receives the "powder applied" signal, the attenuation adjustment module 202 may switch the adjustable optical attenuator 144 to a low-attenuation mode, in which little or no attenuation is performed. This may allow a large amount of light to pass through the aperture 148 and be received by the camera 136. This may allow for the camera 136 to capture the pre-weld image when the build plane 112 is only illuminated by the light source 152 (FIG. 1). After the build signal reception module 200 receives the "weld on" signal, the attenuation adjustment module 202 may switch the adjustable optical attenuator 144 to a high-attenuation mode, in which a greater amount of attenuation is performed. This may allow a smaller amount of light to pass through the aperture 148 and be received by the camera 136 than in the low-attenuation mode. As such, this may limit the amount of light received by the camera 136 while the build plane 112 is illuminated by the energy beam 132 and the in-weld image is captured. After the build signal reception module 200 receives the "weld off" signal, the attenuation adjustment module 202 may switch the adjustable optical attenuator 144 back to the low-attenuation mode. This may allow for a larger amount of light to pass through the aperture 148 and be received by the camera 136 while capturing the post-weld image while the build plane 112 is illuminated only by the light source 152.

A variety of different mechanisms may be used for the adjustable optical attenuator 144. In one example, the adjustable optical attenuator 144 comprises an electronically controlled optical attenuator. In some examples, the adjustable optical attenuator 144 is liquid crystal based. In another example, the adjustable optical attenuator 144 comprises an electronic iris that can be adjusted to different attenuation levels. In another example, the adjustable optical attenuator 144 comprises a mechanical iris that can be adjusted to different attenuation levels. In another example, the adjustable optical attenuator 144 comprises a filter wheel. In this example, the filter wheel comprises two different filters, having different levels of attenuation, that can be rotated in front of the aperture 148 (e.g., by a motor). In another example, the adjustable optical attenuator 144 comprises an adjustable light polarizer that can be rotated in front of the aperture 148 to polarize the light passing through the aperture 148, thereby reducing its intensity.

Referring still to FIG. 2, the illumination module 204 may control illumination of the light source 152. As discussed above, when the camera 136 captures the in-weld image, the build plane 112 is illuminated by the energy beam 132 from the focused energy source 104, and as such, the build plane 112 is sufficiently illuminated for the camera 136 to capture the in-weld image. However, when the pre-weld and post-weld images are captured, the build plane 112 is not illuminated by the energy beam 132. Accordingly, the build plane 112 may not be sufficiently illuminated for these images to be captured without additional illumination. As such, in embodiments, the illumination module 204 may turn on the light source 152 to illuminate the build plane 112 when the pre-weld and post-weld images are captured.

In embodiments, after the build signal reception module 200 receives the "powder applied" signal, the illumination module 204 may turn on the light source 152 such that the light source 152 illuminates the build plane 112 while the camera 136 captures the pre-weld image. After the build signal reception module 200 receives the "weld on" signal, the illumination module 204 may turn off the light source 152 while the camera 136 captures the in-weld image while the build plane 112 is illuminated by the energy beam 132. After the build signal reception module 200 receives the "weld off" signal, the illumination module 204 may turn on the light source 152 such that the light source 152 illuminates the build plane 112 while the camera 136 captures the post-weld image. In some examples, the light source 152 may remain on while the camera 136 captures the in-weld image. In these examples, the build plane 112 is illuminated by both the energy beam 132 and the light source 152 while the in-weld image is captured. However, the light intensity from the light source 152 is typically much less than the light intensity from the energy beam 132, which may allow for the in-weld image to be captured while both sources illuminate the build plane 112.

Referring still to FIG. 2, the image reception module 206 may cause the camera 136 to capture the pre-weld, in-weld, and post-weld images, as disclosed herein. In particular, after the build signal reception module 200 receives the "powder applied" signal, the attenuation adjustment module 202 sets the adjustable optical attenuator 144 to the low-attenuation mode, and the illumination module 204 illuminates the light source 152, the image reception module 206 may cause the camera 136 to capture the pre-weld image of the build plane 112 with the particulate 114 applied. This pre-weld image indicates the powder spreading quality.

After the build signal reception module 200 receives the "weld on" signal, the attenuation adjustment module 202 sets the adjustable optical attenuator 144 to the high-attenuation mode, and the illumination module 204 turns off the light source 152, the image reception module 206 may cause the camera 136 to capture the in-weld image as disclosed herein. In particular, the image reception module 206 may cause the camera 136 to capture a series of frames while the energy beam 132 is scanned across the particulate 114 on build plane 112 as a build layer is being constructed. Thus, the camera 136 may continuously acquire images of the moving melt pool traces.

The camera 136 may have a relatively high frame rate with a short black-out time between consecutive frames during which no light is captured by the camera 136. This black-out time between consecutive frames may be shorter than the time that it takes the energy beam 132 to move a distance substantially longer than the dimensions of the melt pool. This may reduce the amount of missing data between frames.

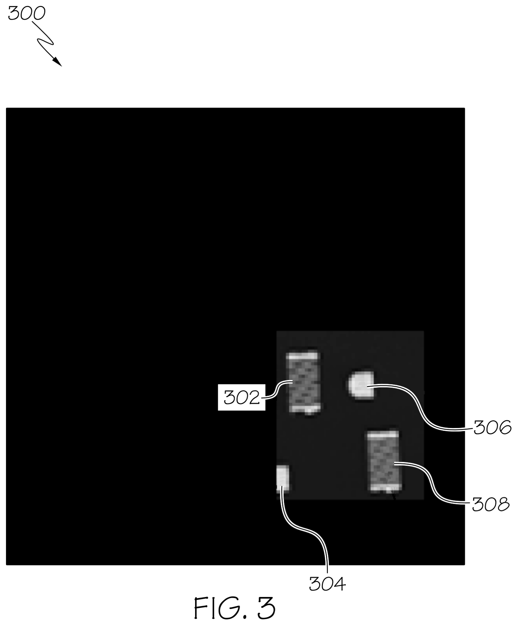

FIG. 3 shows an example image 300 that may be captured by the camera 136 while the energy beam 132 (FIG. 1) is exposed to the particulate 114 (FIG. 1) on the build plane 112 (FIG. 1). In the image 300, features 302, 304, 306, and 308 can be seen, which indicate portions of the particulate 114 that have been exposed to the energy beam 132. The rest of the image 300 is dark, indicating portions of the particulate 114 that have not been exposed to the energy beam 132. As discussed above, the image reception module 206 may cause the camera 136 (FIG. 1) to capture a plurality of such images while the energy beam 132 is scanned across the particulate 114 on build plane 112. As such, each image captured by the camera 136 will show a different portion of the melt pool, and the images may be combined to show the entire melt pool trajectory, as discussed in further detail below.

As discussed above, the dark portion of image 300 indicates portions of the particulate 114 that have not been exposed to the energy beam 132. However, the camera 136 may be susceptible to noise, and may record some amount of light exposure for pixels that have not been exposed to the energy beam 132 due to this noise. As such, in some examples, a denoising procedure may be implemented by the image denoising module 208 (FIG. 2), as disclosed herein.

In embodiments, the image denoising module 208 may determine a threshold light intensity value. This threshold value may be a light intensity value that is above the width of noise distribution in the dark portion of images captured by the camera 136 (e.g., the dark portion of image 300). However, the threshold light intensity value may be set well below the light intensity value recorded by a pixel that has been exposed to the energy beam 132. Then, for every pixel of an image recorded by the camera 136 that records a light intensity value below this threshold, the image denoising module 208 may set the pixel value to zero. This may ensure that every pixel that has not been exposed to the energy beam 132 will be set to zero, thereby avoiding an accumulation of grey values due to camera noise.

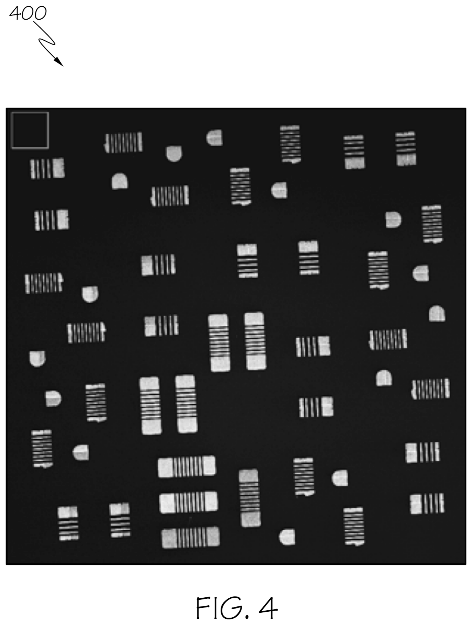

Referring back to FIG. 2, the image stacking module 210 may stack the images captured by the camera 136 while the energy beam 132 is exposed to the particulate 114 to generate a composite in-weld image. As discussed above, each image captured by the camera 136 during the in-weld phase may show a different portion of the melt pool trajectory. As such, the captured images may be combined to generate the composite in-weld image that shows the entire melt pool trajectory. In one example, the image stacking module 210 combines the in-weld images by summing the pixel value of each image to generate the composite in-weld image. In another example, the image stacking module 210 generates the composite in-weld image by taking a maximum value of each pixel across the captured images. FIG. 4 shows an example composite in-weld image 400 that may be generated by the image stacking module 210 using one of these methods. The composite in-weld image 400 shows features from the entire melt pool trajectory.

In some examples, rather than stacking the multiple images captured by the camera 136, the computing device 156 may compare individual captured images to expected patterns based on the scan position of the energy beam 132 for a particular layer to determine whether the layer is being built as expected. In other examples, the computing device 156 may isolate the location on the build plane 112 where the energy beam 132 is focused and this portion of the image captured by the camera 136 may be extracted, with the rest of the image discarded. The extracted images portions from each layer may then be stacked by the image stacking module 210.

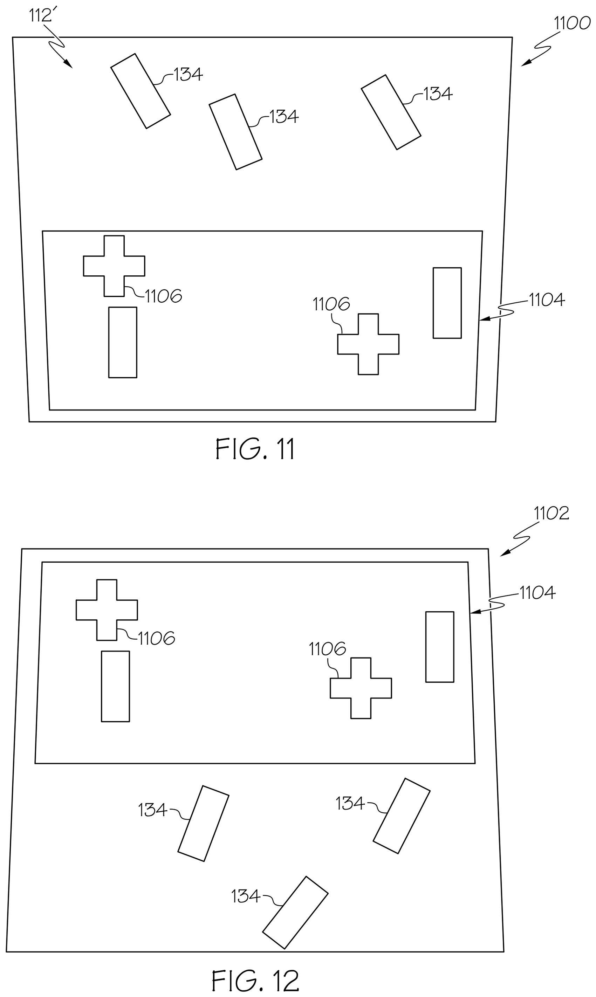

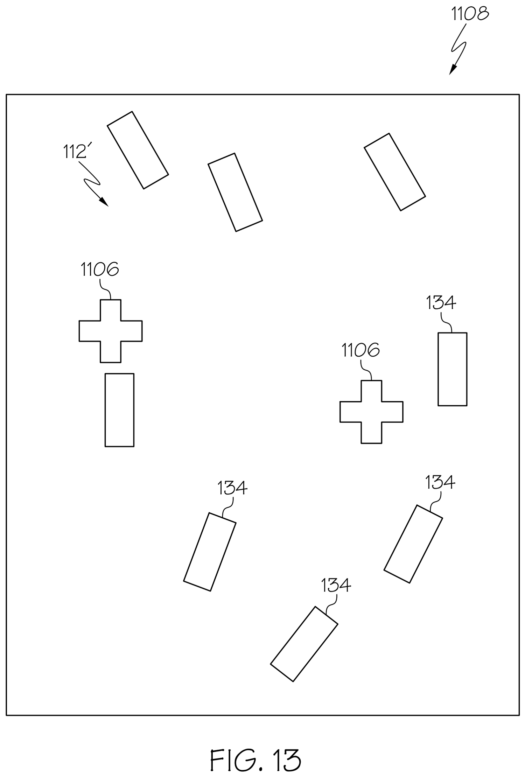

In accordance with some embodiments, the image stacking module 210 may be configured to receive one or more images 1100, 1102 (as discussed below with respect to FIGS. 11-12) and generate a merged image 1108 (FIG. 13). In some embodiments, the image stacking module 210 may utilize interpolation to estimate pixel values to create a smooth transition in the merged image 1108. In other embodiments, the image stacking module 210 may utilize other image processing algorithms, e.g., SR algorithms, averaging, median stacking, weighted averaging, etc.

The image reception module 206 may cause the camera 136 to capture the post-weld image, as disclosed herein. In particular, after the build signal reception module 200 receives the "weld off" signal, the attenuation adjustment module 202 sets the adjustable optical attenuator 144 to the low-attenuation mode, and the illumination module 204 illuminates the light source 152, the image reception module 206 may cause the camera 136 to capture the post-weld image of the build plane 112. This post-weld image shows the top view of the current layer of the component 134 being built.

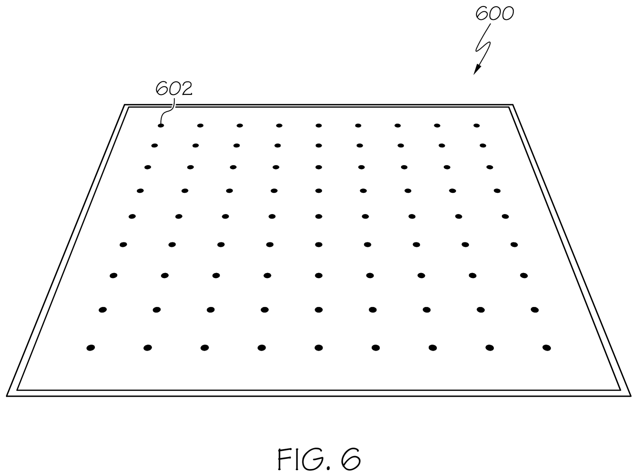

Still referring to FIG. 2, the image analysis module 212 may receive one or more images from the camera 136, one or more images (e.g., pre-weld, in-weld, and/or post-weld) from the image reception module 206, the image denoising module 208, the image stacking module 210, or the like. Such one or more images may be a pre-weld image, an in-weld image, or a post-weld image. In some embodiments, the one or more images may correspond to at least one fiducial marker 602 (as discussed below with respect to FIGS. 6-8). As used herein, the term at least one fiducial marker 602 may encompass a single fiducial marker, one or more fiducial markers, a plurality of fiducial markers, and the like. According to some embodiments, the position of the camera 136, e.g., off-axis relative to the build plane 112, may result in the capture of distorted images (see, e.g., FIG. 6, discussed below). The image analysis module 212 may analyze the one or more images to identify positions of the at least one fiducial marker 602, e.g., the set of center coordinates of at least one fiducial marker 602 generated on the build plane 112. In accordance with some embodiments, the coordinate system of the camera 136 based upon its relative position to the build plane 112 may differ from the coordinate system of the additive manufacturing system 100.

The image transfer function generation module 214 may receive the coordinates of the at least one fiducial marker 602 from the image analysis module 212 in the coordinate system of the camera 136 and determine or retrieve the coordinates of the at least one fiducial marker 602 in the coordinate system of the additive manufacturing system 100. In accordance with some embodiments, the focused energy source 104 (and related components) may produce the at least one fiducial marker 602 at known positions on the build plane 112 based upon the coordinate system of the additive manufacturing system 100. Thus, the actual physical location (e.g., coordinates) of the at least one fiducial maker 602 in the coordinate system of the additive manufacturing system 100 are known. As such, the image transfer function generation module 214 may generate, e.g., fit, a transfer function correlating the camera generated coordinates (from the captured image(s)) to the coordinate system of the additive manufacturing system 100.

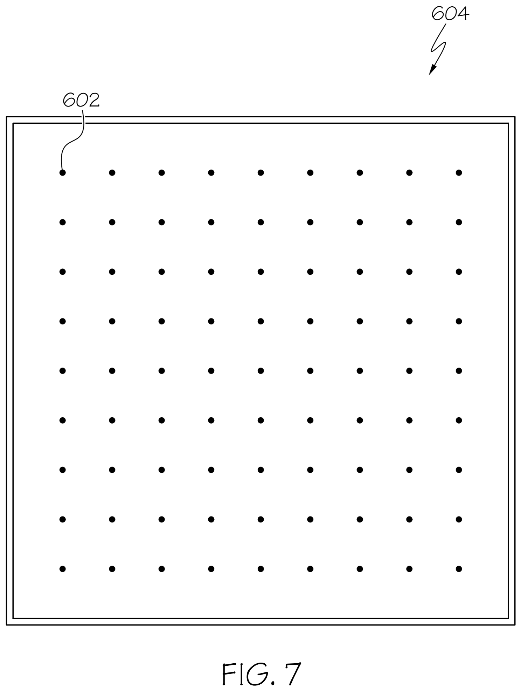

Continuing with FIG. 2, the memory device 158 may include an image correction module 216 configured to receive the transfer function generated by the image transfer function generation module 214 and one or more images (e.g., pre-weld, in-weld, and/or post-weld) from the image reception module 206, the image denoising module 208, the image stacking module 210, directly from the camera 136, or the like. As shown in FIG. 6, the image 600 received by the image correction module 216 may be distorted based upon the image axis 126 or angle 128 of the camera 136 relative to the build plane 112. The image correction module 216, in accordance with some embodiments disclosed and contemplated herein, may apply the transfer function received from the image transfer function generation module 214 to the distorted image 600 to generate a corrected image 604, as shown in FIG. 7.

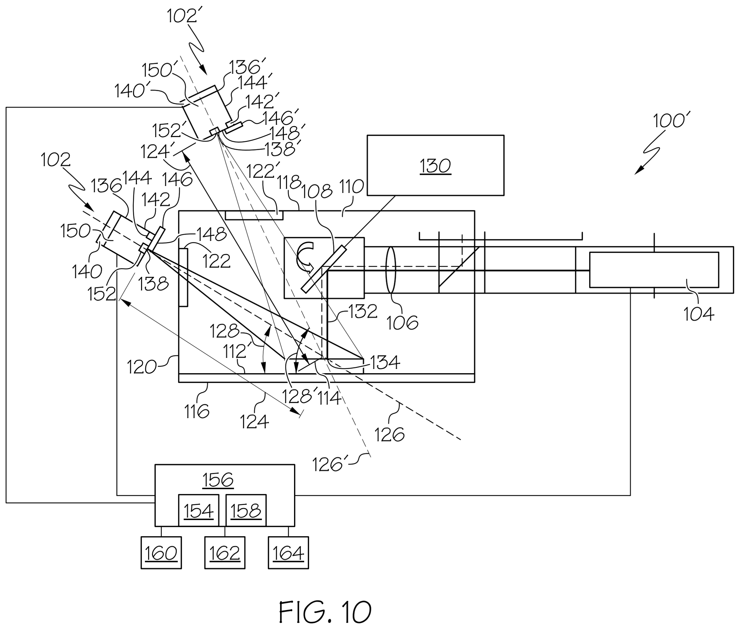

In accordance with one or more embodiments disclosed and contemplated herein, the image correction module 216 may rectify images taken by two or more imaging devices 102, 102' (as discussed in greater detail below with respect to FIGS. 10-14). In such embodiments, the image correction module 216 may apply the image transfer function from the image transfer function generation module 214 to images 1100, 1102 respectively captured by imaging devices 102, 102' to generate distortion-corrected images. According to such embodiments, the images 1100, 1102 correspond to different angles and/or points of view of the build plane 112' resulting from the variance in positioning of the cameras 136, 136'. As such, the intensity distribution in the images 1100, 1102 may differ, e.g., one image may be brighter or darker than the other. The image correction module 216 may be further configured to alleviate the difference in intensity between the images 1100, 1102 in addition to the distortion-correction described above.

The coordinate comparison module 218 may receive measured position information, e.g., the coordinates of the at least one fiducial marker 602 from the distortion-corrected image 604 (e.g., the actual position of the at least one fiducial marker 602 on the build plane 112) from the image analysis module 212. The coordinate comparison module 218 may further retrieve the nominal position information (e.g.., the commanded coordinates where the beam 132 of the focused energy source 104 was instructed to scan) from the build file and compare these corresponding coordinates to determine any deviation between the actual position and the nominal position. That is, the coordinate comparison module 218 may be configured to identify how great of a difference occurred between the actual and the commanded locations of the at least one fiducial marker 602.

The coordinate transfer function generation module 220 may receive the measured, e.g., actual, coordinates of the at least one fiducial marker 602 in the distortion-corrected image 604 from the image analysis module 212, retrieve the nominal coordinates of the at least one fiducial marker 602, e.g., the commanded coordinates, and the determined deviation from the coordinate comparison module 218. In accordance with some embodiments, the focused energy source 104 (and related components) may produce the at least one fiducial marker 602 at commanded positions on the build plane 112 based upon the coordinate system of the additive manufacturing system 100. Thus, the actual physical location (e.g., coordinates) of the at least one fiducial marker 602 in the coordinate system of the additive manufacturing system 100 are known via measurement from the corrected image 604. As such, the coordinate transfer function generation module 220 may generate, e.g., fit, a transfer function correlating the measured coordinates (from the captured image(s)) to the nominal (e.g., commanded) coordinate system of the additive manufacturing system 100.

Still referring to FIG. 2, the calibration module 222 may receive the coordinate transfer function from the coordinate transfer function generation module 220 and apply the coordinate transfer function to the additive manufacturing system 100 to correct any deviation. That is, the scan field geometric calibration of the additive manufacturing system 100, e.g., the position and/or scanning of the beam 132 produced by the focused energy source 104 is updated to enable the commanded (e.g., nominal) coordinates to match the measured (e.g., actual) coordinates determined from the distortion-corrected image 604, as discussed above.

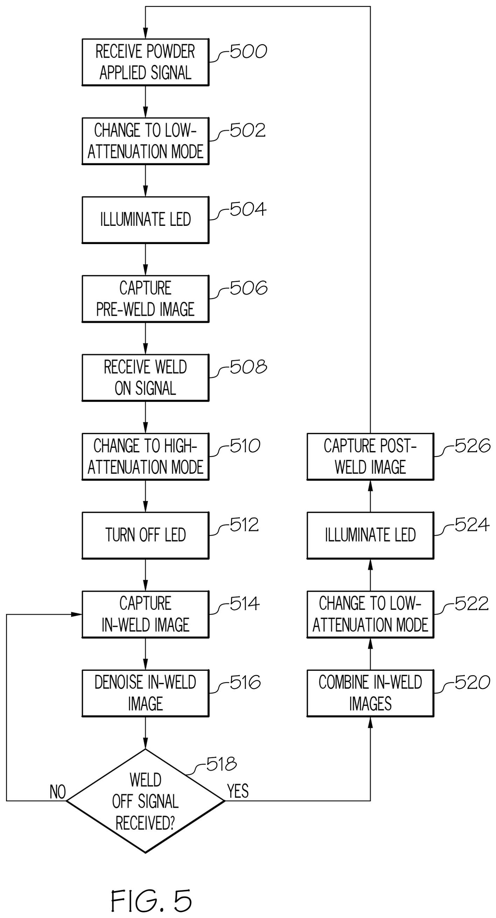

Turning now to FIG. 5, a flowchart of an example method that may be performed by the computing device 156 (FIG. 1) is shown. At step 500, the build signal reception module 200 (FIG. 2) receives the "powder applied" signal from the ECU 130 (FIG. 1). At step 502, the attenuation adjustment module 202 (FIG. 2) changes the adjustable optical attenuator 144 (FIG. 1) to the low-attenuation mode, which causes the adjustable optical attenuator 144 to adjust the attenuation level of the camera 136 to a first attenuation level (e.g., a low attenuation level). At step 504, the illumination module 204 (FIG. 2) illuminates the light source 152 (FIG. 1). At step 506, after the adjustable optical attenuator 144 has changed to the low-attenuation mode and the light source 152 has been illuminated, the image reception module 206 (FIG. 2) causes the camera 136 (FIG. 1) to capture the pre-weld image of the current layer of the component 134 (FIG. 1) being built on the build plane 112 (FIG. 1).

At step 508, the build signal reception module 200 (FIG. 2) receives the "weld on" signal from the ECU 130, indicating a start of exposure of a layer of the component 134 on the build plane to the energy beam 132. At step 510, the attenuation adjustment module 202 (FIG. 2) changes the adjustable optical attenuator 144 to the high-attenuation mode, which causes the adjustable optical attenuator 144 to adjust the attenuation level of the camera to a second attenuation level of the camera 136 to a second attenuation level (e.g., a high attenuation level). The second attenuation level may have a higher attenuation than the first attenuation level. At step 512, after the adjustable optical attenuator 144 has changed to the high-attenuation mode, the illumination module 204 turns off the light source 152.

At step 514, after the adjustable optical attenuator 144 has changed to the high-attenuation mode and the light source 152 is turned off, the image reception module 206 (FIG. 2) causes the camera 136 (FIG. 1) to capture an in-weld image. At step 516, the image denoising module 208 (FIG. 2) de-noises the captured in-weld image by setting pixel values below a threshold value to zero.

At step 518, the image stacking module 210 (FIG. 2) updates the composite in-weld image based on the denoised image. In one example, the image stacking module 210 adds the pixel values of the denoised image to the composite in-weld image. In another example, the image stacking module 210 determines whether any pixel values of the denoised image are greater than the corresponding pixel values of the in-weld composite image. If so, than the image stacking module 210 updates any such pixel values to the pixel values from the denoised image.

At step 520, the build signal reception module 200 determines whether the" weld off" signal has been received from the ECU 130. If the "weld off" signal has not been received from the ECU 130, indicating an end of exposure of the layer of the component 134 on the build plane to the energy beam 132, control returns to step 514 and the next in-weld image is captured after a short black-out time. If the "weld off" signal has been received from the ECU 130, control passes to step 522.

At step 522, the attenuation adjustment module 202 changes the adjustable optical attenuator 144 to the low-attenuation mode. At step 524, the illumination module 204 illuminates the light source 152. At step 526, the image reception module 206 causes the camera 136 to capture the post-weld image. Control then returns to step 500 and the method of FIG. 5 is repeated for the next layer of the build. FIG. 5 may be repeated until the layers have been completed.

During operations of the additive manufacturing system 100 illustrated in FIGS. 1-5, the camera 136 may be utilized, as noted above, to monitor the build process. This utility may rely upon the ability to establish a precise spatial calibration of the camera 136. For example, this monitoring may require that the camera 136 and/or the focused energy source 104, e.g., position of the beam 132, be calibrated to a shared coordinate system, e.g., the coordinate system of the additive manufacturing system 100. To utilize the camera 136 in the detection of process anomalies, the position of the melt pool may be well-registered, e.g., calibrated, to the coordinate system of the additive manufacturing system 100. Such calibration may ensure that the component 134 formed on the build plane 112 is properly fabricated. In accordance with some embodiments disclosed and contemplated herein, a calibration system and method for the camera 136 and/or focused energy source 104 (and related components) is disclosed.

Calibration of the camera 136 may be better understood in conjunction with FIGS. 6 -8, discussed below. As shown in FIG. 1, the camera 136 may not be positioned directly above the build plane 112, such that any images captured by the camera 136 may be distorted. In particular, it will be appreciated that the camera 136 as shown in FIG. 1, may be an off-axis camera, e.g., the position of the camera 136 is off-axis relative to the build plane 112. That is, the one or more images captured by the camera 136, e.g., FIG. 6, may be distorted based upon the image axis 126 or angle 128 of the camera 136 relative to the build plane 112.

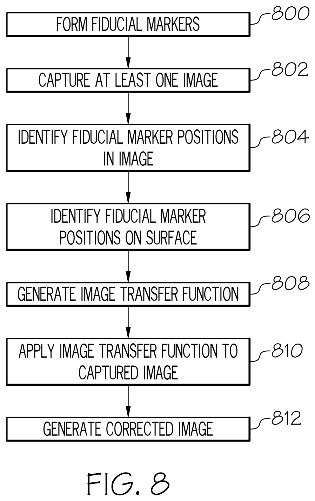

In accordance with some embodiments, and with reference to FIG. 8, calibration of the camera 136 (FIG. 1) may begin at step 800, whereupon at least one fiducial marker is formed at known positions of the coordinate system used by the additive manufacturing system 100 on the build plane 112 (FIG. 1). FIG. 6 provides an illustrative example of an image of a plurality of fiducial markers 602 formed at step 800. Stated another way, a build file may be executed by the ECU 130 (FIG. 1) to cause the additive manufacturing system 100 to fabricate at least one fiducial marker 602. Accordingly, the focused energy source 104 (FIG. 1), and associated components of the additive manufacturing system 100, may perform an exposure sequence across the build plane 112 with the energy beam 132 outlining the at least one fiducial marker 602, e.g., geometric patterns whose center coordinates can be readily measured using image processing. In some embodiments, the formation of the one or more fiducial markers 602 may comprise building of one or more layers on the build plane 112 from raw material (as discussed above). In other embodiments, such at least one fiducial marker 602 may correspond to an actual component 134 or structure of the component 134. In still other embodiments, an anodized calibration plate (not shown) having a coating or layer thereon reactive to the beam 132 may be used on which the at least one fiducial marker 602 may be formed.

At step 802, one or more images of the at least one fiducial marker 602 are captured. In accordance with varying embodiments disclosed and contemplated herein, the camera 136 may be configured to capture one or more images during the exposure sequence of the at least one fiducial marker 602. Such images, for example and without limitation, may correspond to a pre-weld image, an in-weld image, or a post-weld image. That is, at step 802, the image analysis module 212 (FIG. 2) may receive one or more images from the camera 136, one or more images (e.g., pre-weld, in-weld, and/or post-weld) from the image reception module 206 (FIG. 2), the image denoising module 208 (FIG. 2), the image stacking module 210 (FIG. 2), or the like. Such one or more images may be a pre-weld image, an in-weld image, or a post-weld image.

The positions of the fiducial markers 602 are then detected and identified at step 804. In some embodiments, at step 804, the set of center coordinates of at least one fiducial marker 602 is determined. According to some embodiments, the camera 136 may be an off-axis camera, e.g., the camera 136 is positioned off-axis relative to the build plane 112, resulting in the capture of distorted images. The image analysis module 212 may analyze the one or more images to identify positions of the at least one fiducial marker 602, e.g., the set center coordinates of the at least one fiducial marker 602 generated on the build plane 112. In accordance with some embodiments, the coordinate system of the camera 136 based upon its relative position to the build plane 112 may differ from the coordinate system of the additive manufacturing system 100. At step 806, the position of the fiducial markers 602 are identified in the coordinate system of the additive manufacturing system 100. That is, the image analysis module 212 may retrieve the actual physical position (e.g., coordinates) on the build plane 112 of the additive manufacturing system 100 as instructed by the build file of at least one fiducial marker 602.

At step 808, the pairs of coordinates, e.g., the coordinate system of the additive manufacturing system 100 (FIG. 1) and the coordinate system of the camera 136 (FIG. 1) are used by the image transfer generation module 214 (FIG. 2) to generate an image transfer function between the two coordinate systems. In accordance with some embodiments, the image transfer function may be a parameterized function based on the physical geometry of the position of the lens 138 and/or camera 136. In other embodiments, the image transfer function may be a mechanistic relationship to produce a smooth response between the coordinate pairs. The number of fiducial markers 602 (FIG. 6) that may be used to generate the image transfer function may be dependent on the number of adjustable parameters, e.g., degrees of freedom, in the model. Stated another way, as the coordinates of the at least one fiducial marker 602 formed on the build plane 112 are known in the coordinate system of the additive manufacturing system 100, mapping the measured coordinates from the image 600 (FIG. 6) captured by the camera 136 of the at least one fiducial marker 602 to the known coordinates is used to fit the image transfer function between the two coordinate systems.

At step 810, the generated image transfer function is applied by the image correction module 216 (FIG. 2) to the captured image 600 to generate a corrected image 604 at step 812. FIG. 7 provides an illustration of the distortion corrected image 604 after application of the transfer function. Thereafter, any subsequent image captured by the camera 136 during the build process of any component 134 may be corrected to enable the detection of any anomalies. Thus, the generated image transfer function may ensure that the calibration of the camera 136 matches the calibration of the build modality, e.g., the focused energy source 104 of the additive manufacturing system 100. In some embodiments, the image transfer function may be used to register a captured image 600, 604 to the coordinate system of the additive manufacturing system 100, thereby enabling detection of anomalies and progress in component 134 production, as discussed above.

According to some embodiments, the performance of the additive manufacturing system 100 (FIG. 1) may depend on the ability to deliver powder consolidation energy (e.g., energy beam 132 (FIG. 1)) at the designated location with high positional accuracy. Calibration drift may occur and require periodic recalibration of the scanners. It may be appreciated that infrequent calibration does not provide adequate notice that the scanner of the additive manufacturing system 100 (FIG. 1) may drift out of calibration enough to affect the quality of the manufactured parts. When a part is being built with a single scanner, a misaligned scanner results in inaccurate dimensions of the part. To achieve higher productivity especially in larger parts, multiple energy beams, e.g., a first energy beam and a second energy beam, are often used to build different segments of a part. In that case, the mutual misalignment of the energy beams may cause faults in the material properties as well geometric errors. Thus a lot of effort and additional maintenance goes toward maintaining calibration of the machine from build to build.

In accordance with some such embodiments disclosed and contemplated herein, calibration of the additive manufacturing system 100 may be accomplished utilizing the imaging device 102 (FIG. 1) described above. In such embodiments, the imaging device 102 may utilize a high resolution camera 136, lens 138 or other optics, and the computing device 156 (FIG. 1) to implement a method of calibrating the additive manufacturing system 100. Utilizing a camera 136 calibrated as described above with respect to FIGS. 6-8 to detect the position of the beam 132 as it traverses the build plane 112 (FIG. 1) of the additive manufacturing system 100 (FIG. 1). The generated transfer function described above may then be used to determine any deviations of the at least one fiducial marker 602 from the nominal position (e.g., input coordinates of the coordinate system of the additive manufacturing system 100) for detection and/or correction.

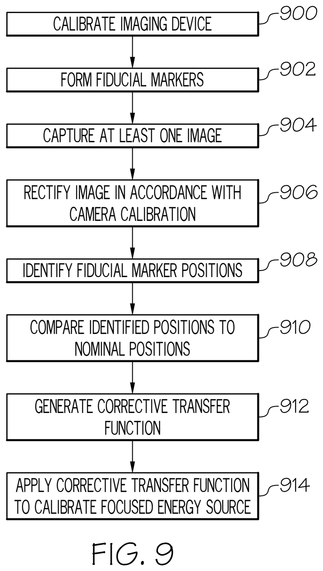

The aforementioned calibration may be better understood in conjunction with FIG. 9, which illustrates the calibration method for a powder-bed fusing additive manufacturing using camera-based monitoring in accordance with some embodiments disclosed and contemplated herein. As illustrated in FIG. 9, at step 900, the imaging device 102 (FIG. 1), e.g., the camera 136 having a line of sight on the build plane 112, is calibrated using a fixed target placed in the field of view of the camera 136 containing at least one fiducial marker 602 (FIG. 6), e.g., a geometric pattern whose center coordinates can be readily measured as discussed above. In accordance ith some embodiments, a plurliaty of such fiducial markers 602 may be used in calibration. In some embodiments, the calibration of the camera 136 (FIG. 1) may be performed in accordance with the methodology discussed above with respect to FIG. 8. As discussed above, after calibration of the camera 136, the calibrated image (e.g., the distortion-corrected image 604 of FIG. 7) of the camera field of view can be generated in which pixel position (e.g., coordinates in the coordinate system of the camera 136) corresponds to a specific set of coordinates on the build plane 112 in the coordinate system of the additive manufacturing system 100.

At step 902, a plurality of fiducial markers 602 are formed at nominal positions of the coordinate system used by the additive manufacturing system 100 on the build plane 112. That is, at least one fiducial marker 602 is formed at a position on the build plane 112 commanded by the build file. As noted above, FIG. 6 provides an illustrative example of an image comprising at least one fiducial marker 602 formed at step 902. Accordingly, the focused energy source 104, and associated components of the additive manufacturing system 100, may perform an exposure sequence across the build plane 112 with the energy beam 132 outlining the plurality of fiducial markers 602. In some embodiments, the formation of the at least one fiducial marker 602 may comprise building of one or more layers on the build plane 112 from raw material (as discussed above). In other embodiments, such at least one fiducial marker 602 may correspond to an actual component 134 or structure of the component 134. In still other embodiments, an anodized calibration plate (not shown) having a coating or layer thereon reactive to the beam 132 may be used on which one or more fiducial markers 602 may be formed.

At step 904, one or more images 600 of at least one fiducial marker 602 are captured. In accordance with varying embodiments disclosed and contemplated herein, the camera 136 may be configured to capture one or more images during the exposure sequence of the at least one fiducial marker 602. Such images, for example and without limitation, may comprise to a pre-weld image, an in-weld image, or a post-weld image. That is, at step 904, the image analysis module 212 (FIG. 2) may receive one or more images from the camera 136, one or more images (e.g., pre-weld, in-weld, and/or post-weld) from the image reception module 206 (FIG. 2), the image denoising module 208 (FIG. 2), the image stacking module 210 (FIG. 2), or the like.

At step 906, the image correction module 216 (FIG. 2) may rectify the image 600 (FIG. 6) of the at least one fiducial marker 602 using the transfer function generated by the transfer function generation module 214 (FIG. 2) described above to produce the distortion-corrected image 604, illustrated in FIG. 7. Generation of the transfer function may occur as discussed above with respect to FIG.8.

Continuing with FIG. 9, the position of the at least one fiducial marker 602 is then detected and identified at step 908. In some embodiments, at step 908, the set of center coordinates of a plurality of fiducial markers 602 are determined from the rectified image 604 (FIG. 7). The image analysis module 212 (FIG. 2) may analyze the one or more images to identify positions of the fiducial markers 602, e.g., the set of center coordinates of one or more fiducial markers 602 generated on the build plane 112 (FIG. 1). In accordance with some embodiments, the coordinates of the fiducial markers 602 may be determined via measurement of one or more fiducial markers 602 on the distortion-corrected image 604 by the image analysis module 212 (FIG. 2).

At step 910, the identified positions of the fiducial markers 602 are then compared to the nominal positions, e.g., the positions in the coordinate system of the additive manufacturing system 100 commanded to be scanned by the build file. That is, the identified position of at least one fiducial marker 602 is compared to the nominal position commanded by the build file. In such an embodiment, the coordinate comparison module 218 may receive measured position information, e.g., the coordinates of the fiducial markers 602 from the image 604 (e.g., the actual position of the fiducial markers 602 on the build plane 112) and the nominal position information (e.g., the commanded coordinates where the beam 132 (FIG. 1) of the focused energy source 104 (FIG. 1) was instructed to scan) from the build file and compare these corresponding coordinates to determine any deviation between the actual position and the nominal position.

At step 912, a coordinate transfer function corresponding to the deviation from nominal of the positions of the fiducial markers 602 determined by the coordinate comparison module 218 (FIG. 2) is generated. According to some embodiments, the coordinate transfer function may be generated by the coordinate transfer generation module 220 (FIG. 2) may receive the measured, e.g., actual, coordinates of the fiducial markers 602 in the distortion-corrected image 604 from the image analysis module 212 (FIG. 2), retrieve the nominal coordinates of the fiducial markers 602, e.g., the commanded coordinates, and the determined deviation from the coordinate comparison module 218 (FIG. 2). In accordance with some embodiments, the coordinate transfer function generation module 220 (FIG. 2) may generate, e.g., fit, a transfer function correlating the measured coordinates (from the captured image(s)) to the nominal (e.g., commanded) coordinate system of the additive manufacturing system 100 (FIG. 1).

At step 914, the corrective transfer function is applied to the additive manufacturing system 100 to correct any deviation occurring between the actual position of the beam 132 (FIG. 1) and the nominal (e.g., commanded) position. That is, at step 914, the scan field geometric calibration of the additive manufacturing system 100, e.g., position and/or scanning of the beam 132, is updated in accordance with the corrective transfer function.

In accordance with some embodiments disclosed and contemplated herein, an additive manufacturing system may include a plurality of beams/scanners. In such embodiments, the camera 136 (FIG. 1) may be configured to capture positions of at least one fiducial marker 602 for each of the beams/scanners in a common coordinate frame, such that their relative alignment could be estimated. For rexample, the camera 136 may be configured to capture a position of at least one fiducial marker 602 for a first beam/scanner and a postion of at least one fiducial marker 602 for a second beam/scanner in a common coordinate frame. Based on the resulting measurements, the scan fields of different scanners may be adjusted/moved to compensate for the mutual misalignment of the fields in accordance with method described above.

In accordance with some embodiments disclosed and contemplated herein, the additive manufacturing system 100 (FIG. 1) may include more than one imaging device 102 (FIG. 1), e.g., multiple cameras at different locations. Such a configuration may enable the use of a larger surface and fabrication of correspondingly larger components. Turning now to FIG. 10, and with reference to FIGS. 11-13, there is shown a schematic view of such an exemplary additive manufacturing system 100' including multiple imaging devices 102, 102' in accordance with one embodiment disclosed and contemplated herein. As illustrated in FIG. 10, the additive manufacturing system 100' is a DMLM system, such as that described above with respect to the system 100 of FIG. 1. Accordingly, the additive manufacturing system 100' includes a focused energy source 104 optically coupled to optics 106 and galvanometers 108 for controlling the scanning of focused energy source 104. In the exemplary embodiment, the focused energy source 104 is a laser device. In alternative embodiments, the additive manufacturing system 100' may include any focused energy sources 104 that enable the additive manufacturing system 100 to operate as described herein. For example, in some embodiments, the additive manufacturing system 100' has a first focused energy source 104 having a first power and a second focused energy source 104 having a second power different from the first power. In further embodiments, the additive manufacturing system 100' has at least two focused energy sources 104 having substantially the same power output. In further embodiments, the additive manufacturing system 100' includes at least one focused energy source 104 that is an electron beam generator.

As discussed above with respect to FIG. 1, the additive manufacturing system 100' shown in FIG. 10 also includes a housing 110 defining a build plane 112' configured to hold a particulate 114. The build plane 112' may be referred to herein as a build plane. In accordance with the exemplary embodiment of FIG. 10, the build plane 112' may be substantially larger in size than the build plane 112 of the additive manufacturing system 100 in FIG. 1. For example and without limitation, the relative size of the build plane 112' may be double, triple, or quadruple the size of the build plane 112. Thus, in one example embodiment, the build plane 112 may be implemented with a build area of 100 sq. in. (645 sq. cm), e.g., a 10 in. by 10 in. (25 cm x 25 cm) build area, and the build plane 112' may be implemented with a build area of 400 sq. in. (2,581 sq. cm), e.g., a 20 in. by 20 in. (51 cm x 51 cm) build area. In such an implementation, the imaging device 102 may adequately capture the build area of the build plane 112, but not have a sufficient field of view to capture the larger build area of the build plane 112' shown in FIG. 10. Accordingly, the additive manufacturing system 100' may utilize two or more imaging devices 102, 102' as shown in FIG. 10.

The housing 110 includes a bottom wall 116 defining the build plane 112', a top wall 118 opposite bottom wall 116, and a sidewall 120 at least partially extending between bottom wall 116 and top wall 118. In alternative embodiments, the housing 110 includes any walls and surfaces that enable the additive manufacturing system 100' to operate as described herein. In the exemplary embodiment, the sidewall 120 defines a viewport 122 therein. In alternative embodiments, the viewport 122 is defined by any portion of the housing 110 that enables the additive manufacturing system 100' to operate as described herein. For example, in some embodiments, the viewport 122 is at least partially defined by the top wall 118. In further embodiments, the housing 110 defines a plurality of viewports 122, 122' through which one or more imaging devices 102, 102' may view the build plane 112'. In such embodiments, the viewport 122 may be positioned on the sidewall 120 and the viewport 122' may be position on the top wall 118, as illustrated in FIG. 10.

In the exemplary embodiment, the imaging device 102 is positioned adjacent the viewport 122 on the exterior of the housing 110. An image axis 126 extends between the imaging device 102 and particulate 114 on the build plane 112'. Accordingly, in the exemplary embodiment, the image axis 126 extends through the viewport 122. The imaging device 102 is spaced a distance 124 from the build plane 112' measured along the image axis 126. In particular, the image axis 126 extends through an aperture 148 of the imaging device 102. In some embodiments, the distance 124 is in a range between about 15 centimeters (cm) (6 inches (in.)) and about 152 cm (60 in.). In further embodiments, the distance 124 is in a range between about 30 cm (12 in.) and about 91 mm (36 in.). In the exemplary embodiment, the distance 124 is approximately 61 cm (24 in.). In alternative embodiments, the imaging device 102 is spaced any distance 124 from the build plane 112' that enables the imaging device 102 to operate as described herein. In the exemplary embodiment, the image axis 126 forms an angle 128 with the build plane 112'. In some embodiments, the image axis 126 and the build plane 112' form an angle 128 in a range between about 70° and about 40°. In further embodiments, the image axis 126 and the build plane 112' form an angle 128 in a range between about 80° and about 20°. In the exemplary embodiment, the image axis 126 and the build plane 112' form an angle 128 of about 45°. In alternative embodiments, the angle 128 is any angle that enables the imaging device 102 to operate as described herein.

Continuing with the exemplary embodiment, the imaging device 102' is positioned adjacent the viewport 122' of the top wall 118 of the housing 110. An image axis 126' extends between the imaging device 102' and particulate 114 on the build plane 112'. Accordingly, in the exemplary embodiment, the image axis 126' extends through the viewport 122'. The imaging device 102' is spaced a distance 124' from the build plane 112' measured along the image axis 126'. In particular, the image axis 126' extends through an aperture 148' of the imaging device 102'. In some embodiments, the distance 124' is in a range between about 15 centimeters (cm) (6 inches (in.)) and about 152 cm (60 in.). In further embodiments, the distance 124' is in a range between about 30 cm (12 in.) and about 91 mm (36 in.). In the exemplary embodiment, the distance 124' is approximately 61 cm (24 in.). In alternative embodiments, the imaging device 102' is spaced any distance 124' from the build plane 112' that enables the imaging device 102 to operate as described herein. In the exemplary embodiment, the image axis 126' makes an angle 128' with the build plane 112'. In some embodiments, the image axis 126 and the build plane 112' make an angle 128' in a range between about 70° and about 40°. In further embodiments, the image axis 126' and the build plane 112' make an angle 128' in a range between about 80° and about 20°. In the exemplary embodiment, the image axis 126' and the build plane 112' make an angle 128' of approximately 45°. In alternative embodiments, the angle 128' is any angle that enables the imaging device 102' to operate as described herein.

As used herein, the term "field of view" refers to the extent of an area that the imaging device 102, 102' captures in an image. In the exemplary embodiment, the field of view of the imaging device 102, 102' is in reference to the build plane 112' and depends on the position and orientation of the imaging device 102, 102' in relation to the build plane 112'. The field of view of the imaging device 102, 102' may be adjusted by adjusting components of the imaging device 102, 102', such as optics, and the distance between the build plane 112' and the imaging device 102, 102'. In the exemplary embodiment, the imaging devices 102, 102' may each have a field of view of the build plane 112' of approximately 250 millimeters (mm)×250 mm. In alternative embodiments, the imaging device 102 may have any field of view that enables the imaging device 102 to image a portion of the build plane 112', and the imaging device 102' may have a field of view that enables the imaging device 102' to image another portion of the build plane 112' as described herein. For example, in some embodiments, the imaging device 102' is disposed adjacent the top wall 118 and has a field of view of the build plane 112' of approximately 250 mm×280 mm, such that the field of views of the imaging device 102 and the imaging device 102' partially overlap, as discussed in greater detail below with respect to FIGS. 11-14.

As noted above with respect to the additive manufacturing system 100 of FIG. 1, the system 100' also includes a computer control system, or electronic control unit (ECU) 130. Galvanometers 108 are controlled by the ECU 130 and deflect a beam 132 (e.g., a laser beam) of focused energy source 104 along a predetermined path on the build plane 112. In some embodiments, the galvanometers 108 include two-dimension (2D) scan galvanometers, three-dimension (3D) scan galvanometers, dynamic focusing galvanometers, and/or any other galvanometer system that deflect the beam 132 of focused energy source 104. In alternative embodiments, the galvanometers 108 deflect a plurality of beams 132 along at least one predetermined path.

The additive manufacturing system 100' is operated to fabricate a component 134 by a layer-by-layer manufacturing process as discussed above with respect to the additive manufacturing system 100 of FIG. 1. As such, the component 134 may be suitably fabricated from an electronic representation of the 3D geometry of the component 134, such as an electronic representation produced in a computer aided design (CAD) or similar file. Accordingly, the electronic representation may of the component 134 may be converted into a layer-by-layer format that includes a plurality of build parameters for each layer. In the exemplary embodiment, the component 134 is arranged electronically in a desired orientation relative to the origin of the coordinate system used in the additive manufacturing system 100'. The geometry of the component 134 is sliced into a stack of layers of a desired thickness, such that the geometry of each layer is an outline of the cross-section through the component 134 at that particular layer location. A "toolpath" or "toolpaths" are generated across the geometry of a respective layer. The build parameters are applied along the toolpath or toolpaths to fabricate that layer of the component 134 from the material used to construct the component 134. The steps are repeated for each respective layer of the component 134 geometry. Once the process is completed, an electronic computer build file (or files) is generated including all of the layers. The build file is loaded into the ECU 130 of the additive manufacturing system 100' to control the system during fabrication of each layer. Operations of the additive manufacturing system 100' thereafter continue as described above with respect to FIG. 1.

In accordance with the embodiment illustrated in FIG. 10, the imaging devices 102, 102' respectively include at least one first camera 136 and at least one second camera 136' including tilt-shift lenses 138, 138', sensors 140, 140', a casing 142, 142', an adjustable optical attenuators 144, 144', and shutters 146, 146'. In the illustrated example, the first camera 136 and second camera 136' may comprise a complementary metal-oxide-semiconductor (CMOS) camera. However, other types of cameras may be utilized by imaging devices 102, 102', including, for example and without limitation, charge-coupled device cameras, electron-multiplying charge-coupled device cameras, back-illuminated CMOS device cameras, or the like.

The casings 142, 142' respectively define apertures 148, 148' for light to enter interior spaces 150, 150' defined by the casings 142, 142'. The tilt-shift lenses 138, 138', the adjustable optical attenuators 144, 144', and the shutters 146, 146' are disposed adjacent the respective apertures 148, 148'. The tilt-shift lens 138 directs and focuses light onto the sensors 140, 140', which are disposed in the respective interior spaces 150, 150'. The tilt-shift lenses 138, 138' may improve the sharpness of images captured by the first camera 136 and second camera 136' and optimize lens performance and focus condition at an oblique incidence. The adjustable optical attenuators 144, 144' change the light collecting efficiency of the first camera 136 and second camera 136', as disclosed in further detail below. In alternative embodiments, the first camera 136 and second camera 136' may include any components that enable the imaging devices 102, 102' to operate as described herein.

In embodiments, the shutters 146, 146' are positionable between an open position that allows light to travel through respective apertures 148, 148' and a closed position that inhibits light traveling through the apertures 148, 148'. In embodiments, the imaging devices 102, 102' include corresponding light sources 152, 152' to illuminate the build plane 112'. In particular, the light source 152, 152' may illuminate the build plane 112' at the start of a build layer so that the cameras 136, 136' can capture a pre-weld image before the beam 132 is emitted from the focused energy source 104. The light source 152, 152' may also illuminate the build plane 112' at the end of a build layer after the beam 132 from the focused energy source 104 is turned off so that the cameras 136, 136' can capture a post-weld image.

As described above, the shutters 146, 146' of the imaging devices 102, 102' are positioned in the open position during operation such that light is allowed to travel through the apertures 148, 148' and strike the sensors 140, 140'. The light activates the sensors 140, 140' and is converted to electronic signals. In the exemplary embodiment, the sensors 140, 140' include a plurality of pixels (not shown) that are activated by light. In accordance with some embodiments, the image is transmitted to a processor 154 coupled to first camera 136 and second camera 136'. In some embodiments, the processor 154 is configured to recognize differences in light intensity in the image.

As discussed in detail above, the ECU 130 may be any controller typically provided by a manufacturer of the additive manufacturing system 100' to control operation of the additive manufacturing system 100'. As further illustrated in FIG. 10, the computing device 156 is coupled to the imaging devices 102, 102' and the focused energy source 104. As discussed above with respect to FIG. 1, the computing device 156 includes a memory device 158 and the processor 154 coupled to the memory device 158, wherein the processor 154 may include one or more processing units, such as, without limitation, a multi-core configuration. In some embodiments, executable instructions are stored in the memory device 158. The computing device 156 is configurable to perform one or more operations described herein by programming the processor 154. For example, the processor 154 may be programmed by encoding an operation as one or more executable instructions and providing the executable instructions in the memory device 158. In the exemplary embodiment, the memory device 158 is one or more devices that enable storage and retrieval of information such as executable instructions or other data. In some embodiments, the memory device 158 includes one or more computer readable media, such as, without limitation, random access memory (RAM), dynamic RAM, static RAM, a solid-state disk, a hard disk, read-only memory (ROM), erasable programmable ROM, electrically erasable programmable ROM, non-volatile RAM memory, or the like.

In some embodiments, the memory device 158 is configured to store build parameters including, without limitation, real-time and historical build parameter values, or any other type of data. In the exemplary embodiment, the memory device 158 stores images generated by the imaging devices 102, 102'. In alternative embodiments, the memory device 158 stores any data that enable the additive manufacturing system 100' to operate as described herein. In some embodiments, the processor 154 removes or "purges" data from the memory device 158 based on the age of the data. For example, the processor 154 overwrites previously recorded and stored data associated with a subsequent time or event. In addition, or alternatively, the processor 154 removes data that exceeds a predetermined time interval. In addition, the memory device 158 includes, without limitation, sufficient data, algorithms, and commands to facilitate monitoring and measuring of build parameters and the geometric conditions of the component 134 fabricated by the additive manufacturing system 100'.

The memory device 158 may also store one or more memory modules storing instructions that may be executed by the processor 154. Each of the memory modules stored in the memory device may be a program module in the form of operating systems, application program modules, and other program modules. Such a program module may include, but is not limited to, routines, subroutines, programs, objects, components, data structures and the like for performing specific tasks or executing specific data types as described above with respect to FIG. 2.

In some embodiments, the computing device 156 includes a presentation interface 160 coupled to the processor 154. The presentation interface 160 presents information, such as images generated by the imaging devices 102, 102', to a user. In one embodiment, the presentation interface 160 includes a display adapter (not shown) coupled to a display device (not shown), such as a cathode ray tube (CRT), a liquid crystal display (LCD), an organic LED (OLED) display, or an "electronic ink" display. In some embodiments, the presentation interface 160 includes one or more display devices. In addition, or alternatively, the presentation interface 160 includes an audio output device (not shown), for example, without limitation, an audio adapter or a speaker (not shown).

In some embodiments, the computing device 156 includes a user input interface 162. In the exemplary embodiment, the user input interface 162 is coupled to the processor 154 and receives input from the user. In some embodiments, the user input interface 162 includes, for example, without limitation, a keyboard, a pointing device, a mouse, a stylus, a touch sensitive panel, such as, without limitation, a touch pad or a touch screen, and/or an audio input interface, such as, without limitation, a microphone. In further embodiments, a single component, such as a touch screen, functions as both a display device of the presentation interface 160 and the user input interface 162.

In the exemplary embodiment, a communication interface 164 is coupled to the processor 154 and is configured to be coupled in communication with one or more other devices, such as the imaging devices 102, 102', and to perform input and output operations with respect to such devices while performing as an input channel. For example, in some embodiments, the communication interface 164 includes, without limitation, a wired network adapter, a wireless network adapter, a mobile telecommunications adapter, a serial communication adapter, or a parallel communication adapter. The communication interface 164 receives a data signal from or transmits a data signal to one or more remote devices. For example, in an alternative embodiment, the communication interface 164 of the computing device 156 communicates with the ECU 130.

The presentation interface 160 and the communication interface 164 are both capable of providing information suitable for use with the methods described herein, such as, providing information to the user or the processor 154. Accordingly, the presentation interface 160 and the communication interface 164 are referred to as output devices. Similarly, the user input interface 162 and the communication interface 164 are capable of receiving information suitable for use with the methods described herein and are referred to as input devices.

In reference to FIG. 10, an exemplary method of manufacturing the component 134 using the additive manufacturing system 100' includes depositing a first layer of particulate 114 on the build plane 112'. The shutters 146, 146' of respective imaging devices 102, 102' are moved to the open position and maintained in the open position. In some embodiments, the shutters 146, 146' are maintained in the open position for longer than 1 minute. In the exemplary embodiment, the shutters 146, 146' are maintained in the open position for a period of time in a range between about 1 minute and about 10 minutes. In alternative embodiments, the shutters 146, 146' are maintained in the open position for any period of time that enables the imaging devices 102, 102' to operate as described herein.

In the exemplary embodiment, the beam 132 is directed toward the first layer of the particulate 114 on the build plane 112' and the particulate 114 is heated to a melting point. The particulate 114 at least partially melts to form a melt pool, which emits light. In some embodiments, the ECU 130 controls the additive manufacturing system 100' to direct the beam 132 from the focused energy source 104 towards the particulate 114. The ECU 130 controls the movement of the galvanometers 108 to scan the beam 132 across the particulate 114 on the build plane 112' according to a predetermined path defined by the build file for the component 134 to form a melt path. The first camera 136 and second camera 136' are positioned having lines of sight on the build plane 112' such that the fields of view of the first camera 136 and second camera 136' each encompass a portion of the melt path. That is, the first camera 136 has a first line of sight on the build plane 112' such that the first camera 136 comprises a first field of view encompassing a portion of the melt path, and the second camera 136' has a second line of sight on the build plane 112' such that the second camera 136' comprises a second field of view encompassing a portion of the melt path. In some embodiments, the first field of view and the second field of view may correspond to different portions of the melt path. In the exemplary embodiment, light from the melt pool travels through the apertures 148, 148' and strikes the sensors 140, 140' while the shutters 146, 146' are maintained in the open position. In some embodiments, a second layer of particulate 114 is deposited on the build plane 112' and the second layer of particulate 114 is heated by the beam 132. The first camera 136 and second camera 136' may capture a plurality of images during operation of the manufacturing system 100' as discussed below with respect to FIGS. 11-14.

As noted above, the additive manufacturing system 100' may include two or more imaging devices 102, 102' configured to capture images of at least a portion of the build plane 112'. In contrast to the build plane 112 of FIG. 1, the build plane 112' comprises a larger build area that may exceed the field of view of a single imaging device 102. Accordingly, in response to the larger build area of the build plane 112', the image device 102 and the image device 102' are positioned to capture overlapping images of the build plane 112', as illustrated in FIGS. 11 and 12. As shown in FIGS. 11 and 12, each of the images 1100 (captured by the first camera 136) and 1102 (captured by the second camera 136') may be combined or merged to form a corrected image of the entire build plane 112', as shown in FIG. 13. In accordance with one or more embodiments contemplated herein, first camera 136 and second camera 136' of the additive manufacturing system 100 may be calibrated in accordance with the systems and methods described above with respect to FIG. 8.

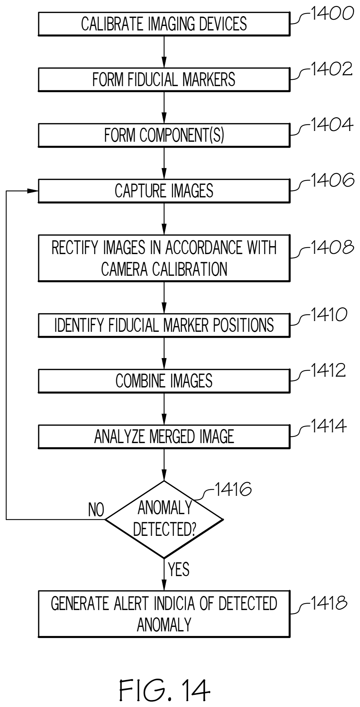

Turning now to FIG. 14, there is shown a method for large-area imaging process monitoring of an additive manufacturing system 100' in accordance with one or more embodiments disclosed herein. At step 1400, the imaging device 102, 102', e.g., first camera 136 and second camera 136', are calibrated using a fixed target placed in the field of view of the first camera 136 and second camera 136' containing at least one fiducial marker 1106, e.g., one or more geometric patterns whose center coordinates can be readily measured as discussed above. In some embodiments, a plurality of fiducial markers 1106 may be utilized in the aforementioned calibration. In some embodiments, the calibration of the first camera 136 and second camera 136' may be performed in accordance with the methodology discussed above with respect to FIG. 8. As discussed above, after calibration of the first camera 136 and second camera 136', a calibrated image (e.g., the distortion-corrected image 604 of FIG. 7) of the camera field of view can be generated in which pixel position (e.g., coordinates in the coordinate system of the first camera 136 and second camera 136') corresponds to a specific set of coordinates on the build plane 112' in the coordinate system of the additive manufacturing system 100'.

At step 1402, a plurality of fiducial markers 1106 are formed at nominal positions of the coordinate system used by the additive manufacturing system 100' on the build plane 112'. That is, the positions on the build plane 112' commanded by the build file. In some embodiments, at least one fiducial marker 1106 is formed on the build plane 112' at a position commanded by the build file. As used herein, one or more fiducial markers 1106 may be formed in accordance with a variety of parameters (described below), and reference herein to at least one fiducial marker 1106 may encompass one or more markers, a plurality of markers, and/or the like. FIGS. 11-13 provide illustrative views of the fiducial markers 1106 formed on the build plane 112' of the additive manufacturing system 100' in accordance with some embodiments disclosed and contemplated herein. While illustrated in FIGS. 11-13 as crosses or plus signs, the form of the fiducial markers 1106 may comprise any suitable structure capable of being utilized by the system 100'. As shown in FIGS. 11-12, each of the field of views of the first camera 136 and second camera 136' include an overlap region 1104 on the build plane 112' that is present in each image 1100, 1102 captured by the respective cameras 136, 136'. In accordance with some embodiments, the overlap region 1104 corresponds to a portion of the build plane 112' that is capable of being viewed by the first camera 136 and second camera 136' in which fiducial markers 1106 may be formed. Accordingly, the focused energy source 104, and associated components of the additive manufacturing system 100', may perform an exposure sequence across the build plane 112' with the energy beam 132 outlining the plurality of fiducial markers 1106, e.g., geometric patterns whose center coordinates can be readily measured using image processing. In some embodiments, the formation of the one or more fiducial markers 1106 may comprise building of one or more layers on the build plane 112' from raw material (as discussed above). In other embodiments, such one or more fiducial markers 1106 may correspond to actual components 134 or structures of the component 134.

At step 1404, one or more components 134 are formed at nominal positions of the coordinate system used by the additive manufacturing system 100' on the build plane 112' as commanded by the build file. FIGS. 11-13 provide illustrative views of the one or more components 134 formed on the build plane 112' of the additive manufacturing system 100' in accordance with some embodiments disclosed and contemplated herein. While illustrated in FIGS. 11-13 as multiple separate structures, the one or more components 134 may comprise a single structure on the build plane 112', sufficiently large enough to cross the first field of view of the first camera 136, and the second field of view of the second camera 136'. Accordingly, the focused energy source 104, and associated components of the additive manufacturing system 100', may perform an exposure sequence across the build plane 112' with the energy beam 132 outlining the one or more components 134. In some embodiments, the formation of the one or more components 134 may comprise building of one or more layers on the build plane 112' from raw material (as discussed above).

At step 1406, one or more images 1100, 1102 of the build plane 112' are captured. In accordance with varying embodiments disclosed and contemplated herein, the cameras 136, 136' may be configured to capture one or more images during the exposure sequence of the fiducial markers 1106 and/or components 134. Such images, for example and without limitation, may comprise to a pre-weld image, an in-weld image, or a post-weld image. That is, at step 1406, the image analysis module 212 may receive one or more images from the first camera 136 and second camera 136', one or more images (e.g., pre-weld, in-weld, and/or post-weld) from the image reception module 206, the image denoising module 208, the image stacking module 210, or the like. Such one or more images may be a pre-weld image, an in-weld image, or a post-weld image.

In accordance with some aspects, the image correction module 216 may rectify the images 1100, 1102 of fiducial markers 1106 on the build plane 112' using the transfer function generated by the transfer function generation module 214 described above to produce corresponding distortion-corrected images at step 1408. Generation of the transfer function may occur as discussed above with respect to FIG. 8. In accordance with some embodiments, each of the images 1100, 1102 corresponds to different angles and/or points of view of the build plane 112' resulting from the variance in positioning of the first camera 136 and second camera 136'. As such, the intensity distribution in the images 1100, 1102 may differ, e.g., one image may be brighter or darker than the other. The rectification performed at step 1408 may alleviate the difference in intensity between the images 1100, 1102.

At step 1410, the positions of the fiducial markers 1106 in each image 1100, 1102 are identified. According to some embodiments, the set of center coordinates of the fiducial markers 1106 are determined from the rectified images output at step 1408. The image analysis module 212 may analyze each of the images 1100, 1102 to identify the positions of the fiducial markers 1106 generated on the build plane 112' in the coordinate system of the additive manufacturing system 100'.

At step 1412, the rectified versions of the images 1100, 1102 are merged or combined to form a single image, such as shown in FIG. 13. In accordance with some embodiments, the image stacking module 210 may receive the rectified versions of the images 1100, 1102 and utilize one or more imaging algorithms to generate a merged image 1108, as shown in FIG. 13. In one non-limiting example, the image stacking module 210 may utilize the overlap region 1104 and the fiducial markers 1106 to align the rectified images 1100, 1102 and form the merged image 1108.

At step 1414, the merged image 1104 is analyzed by the image analysis module 212 to detect any anomalies present in the build layer, e.g., any anomalies present in the one or more components 134. According to some embodiments, the image analysis module 212 may compare the one or more components 134 present in the merged image 1108 to the build file, e.g., compares structure, shape, etc., with template or standard images of the one or more components 134, to determine whether any discrepancies, e.g., anomalies are present in the one or more components.

At step 1416, a determination is made whether an anomaly is present in the components 134 and/or on the build plane 112' in accordance with the analysis of the merged image 1104. Upon a negative determination, operations return to step 1406, whereupon one or more images are captured by the first camera 136 and second camera 136' during the next stage of the build process, e.g., the formation of the next layer of the one or more components 134.

Upon a positive determination at step 1416, e.g., an anomaly has been determined from the merged image 1104, the ECU 130 or computing device 156 generates one or more alert indicia corresponding to the detected anomaly at step 1418. The aforementioned indicia may comprise, for example and without limitation, a visual alert, e.g., displayed on a display, blinking/flashing light, etc., an audible alert, e.g., via a speaker, alarm, etc., and/or a tactile alert, e.g., a vibration sent to an operator, or any combination thereof.

The above described systems and methods relate to additive manufacturing systems, such as Direct Metal Laser Melting (DMLM) systems. The embodiments described above include a focused energy source and an imaging device. During operation of the focused energy source, the imaging device generates a pre-weld image, an in-weld image, and a post-weld image of a melted particulate forming a melt pool. In some embodiments, substantially the entire melt pool is captured in the in-weld and post-weld images. The pre-weld image illustrates the powder coat before exposure to a beam from the focused energy source. The in-weld image illustrates intensity of light throughout the melt pool. The post-weld image illustrates a top view of a component after a layer has been completed. In some embodiments, the pre-weld, in-weld, and post-weld images may be inspected to determine variations and defects in the additive manufacturing process. As a result, errors in the additive manufacturing process are corrected and the process is improved. In some embodiments, the pre-weld, in-weld, and post-weld images may be used in a feed-forward process to improve the manufacturing of subsequent components.

An exemplary technical effect of the methods and systems described herein includes at least one of: (a) capturing a pre-weld image that illustrates the powder coat before exposure to the beam from the focused energy source; (b) capturing a post-weld image that illustrates a completed layer of a component being built; (c) capturing the pre-weld, in-weld, and post-weld images with a CMOS camera; (d) imaging substantially all of the melt pool in a single layer during formation of a component; (e) determining intensity of light from the melt pool at different points; (f) relating images of the melt pool to positions; (f) reducing time and resources required for imaging the melt pool; (g) increasing the compatibility of imaging devices with different additive manufacturing systems; (h) detecting defects during the additive manufacturing process; (i) reducing product development cycle time; (j) increasing machine control for precise geometries; and (k) providing visual feedback on the powder coat, the melt pool, and layers of the component being built.

Some embodiments involve the use of one or more electronic or computing devices. Such devices typically include a processor or controller, such as a general purpose central processing unit (CPU), a graphics processing unit (GPU), a microcontroller, a field programmable gate array (FPGA), a reduced instruction set computer (RISC) processor, an application specific integrated circuit (ASIC), a programmable logic circuit (PLC), and/or any other circuit or processor capable of executing the functions described herein. In some embodiments, the methods described herein are encoded as executable instructions embodied in a computer readable medium, including, without limitation, a storage device, and/or a memory device. Such instructions, when executed by a processor, cause the processor to perform at least a portion of the methods described herein. The above examples are exemplary only, and thus are not intended to limit in any way the definition and/or meaning of the term processor.

Exemplary embodiments for enhancing the build parameters for making additive manufactured components are described above in detail. The apparatus, systems, and methods are not limited to the specific embodiments described herein, but rather, operations of the methods and components of the systems may be utilized independently and separately from other operations or components described herein. For example, the systems, methods, and apparatus described herein may have other industrial or consumer applications and are not limited to practice with components as described herein. Rather, one or more embodiments may be implemented and utilized in connection with other industries.

Further aspects of the disclosure are provided by the subject matter of the following clauses.

An apparatus comprising one or more processors; and memory comprising machine-readable instructions that, when executed by the one or more processors, cause the apparatus to receive a plurality of images of a particulate on a build plane of an additive manufacturing system captured by a camera while one layer of the particulate is exposed to an energy beam of the additive manufacturing system; and combine the plurality of images to generate an image of a melt pool trajectory of the one layer of the particulate.

The apparatus of any preceding clause, wherein the instructions further cause the apparatus to combine the plurality of images by summing the pixel values from each of the plurality of images.

The apparatus of any preceding clause, wherein the instructions further cause the apparatus to combine the plurality of images by taking a maximum value of each pixel among the plurality of images.

The apparatus of any preceding clause, wherein the instructions further cause the apparatus to receive a signal from the additive manufacturing system indicating a start of exposure of the particulate to the energy beam; and begin capturing the plurality of images after receiving the signal from the additive manufacturing system.

The apparatus of any preceding clause, wherein the instructions further cause the apparatus to receive a signal from the additive manufacturing system indicating an end of exposure of the particulate to the energy beam; and stop capturing the plurality of images after receiving the signal from the additive manufacturing system.

The apparatus of any preceding clause, wherein the instructions further cause the apparatus to set pixel values for each pixel of the plurality of images having a value less than a predetermined threshold to zero.

The apparatus of any preceding clause, wherein the predetermined threshold is greater than or equal to a distribution of noise associated with a camera the captures the plurality of images.

The apparatus of any preceding clause, wherein the camera is a complementary metal-oxide-semiconductor (CMOS) camera.

A method comprising receiving a plurality of images of a particulate on a build plane of an additive manufacturing system captured by a complementary metal-oxide-semiconductor (CMOS) camera while one layer of the particulate is exposed to an energy beam of the additive manufacturing system; and combining the plurality of images to generate an image of a melt pool trajectory of the one layer of the particulate.

The method of any preceding clause, further comprising combining the plurality of images by summing the pixel values from each of the plurality of images.

The method of any preceding clause, further comprising combining the plurality of images by taking a maximum value of each pixel among the plurality of images.

The method of any preceding clause, further comprising receiving a signal from the additive manufacturing system indicating a start of exposure of the particulate to the energy beam; and beginning to capture the plurality of images after receiving the signal from the additive manufacturing system.

The method of any preceding clause, further comprising receiving a signal from the additive manufacturing system indicating an end of exposure of the particulate to the energy beam; and stopping the capture of the plurality of images after receiving the signal from the additive manufacturing system.

The method of any preceding clause, further comprising setting pixel values for each pixel of the plurality of images having a value less than a predetermined threshold to zero.

The method of any preceding clause, wherein the predetermined threshold is greater than or equal to a distribution of noise associated with a camera the captures the plurality of images.

The method of any preceding clause, wherein the camera is a complementary metal-oxide-semiconductor (CMOS) camera.

A system comprising an apparatus for building a component by additive manufacturing using an energy beam, the apparatus comprising a build plane on which the component is built; a camera having a line of sight on the build plane; and a computing device configured to receive a plurality of images of a particulate on a build plane of an additive manufacturing system captured by a camera while one layer of the particulate is exposed to an energy beam of the additive manufacturing system; and combine the plurality of images to generate and image of a melt pool trajectory of the one layer of the particulate.

The system of any preceding claim, wherein the computing device is further configured to combine the plurality of images by summing the pixel values from each of the plurality of images.

The system of any preceding claim, wherein the computing device is further configured to combine the plurality of images by taking a maximum value of each pixel among the plurality of images.

The system of any preceding claim, wherein the computing device is further configured to receive a signal from the additive manufacturing system indicating a start of exposure of the particulate to the energy beam; and begin capturing the plurality of images after receiving the signal from the additive manufacturing system.

The system of any preceding claim, wherein the computing device is further configured to receive a signal from the additive manufacturing system indicating an end of exposure of the particulate to the energy beam; and stop capturing the plurality of images after receiving the signal from the additive manufacturing system.

The system of any preceding claim, wherein the computing device is further configured to set pixel values for each pixel of the plurality of images having a value less than a predetermined threshold to zero.

The system of any preceding claim, wherein the predetermined threshold is greater than or equal to a distribution of noise associated with a camera the captures the plurality of images.

The system of any preceding claim, wherein the camera is a complementary metal-oxide-semiconductor (CMOS) camera.

A system comprising an apparatus for building a component by additive manufacturing using an energy beam, the apparatus comprising a build plane on which the component is built; a camera having a line of sight on the build plane; an adjustable attenuator to adjust an attenuation level of the camera; and a computing device configured to receive a powder applied signal from the apparatus indicating that a layer of particulate has been deposited onto the build plane; upon receiving the powder applied signal, cause the adjustable attenuator to adjust the attenuation level of the camera to a first attenuation level; receive a pre-weld image of the build plane captured by the camera after the attenuation level of the camera is set to the first attenuation level; receive a weld on signal from the apparatus indicating a start of exposure of a layer of the component on the build plane to the energy beam; upon receiving the weld on signal, cause the adjustable attenuator to adjust the attenuation level of the camera to a second attenuation level, the second attenuation level having a higher attenuation than the first attenuation level; receive at least one in-weld image of the build plane captured by the camera after the attenuation level of the camera is set to the second attenuation level; receive a weld off signal from the apparatus indicating an end of exposure of the layer of the component on the build plane to the energy beam; upon receiving the weld off signal, cause the adjustable attenuator to adjust the attenuation level of the camera to a third attenuation level, the third attenuation level having a lower attenuation than the second attenuation level; and receive a post-weld image of the build plane captured by the camera after the attenuation level of the camera is set to the third attenuation level.

The system of any preceding clause, wherein the camera is a complementary metal-oxide-semiconductor (CMOS) camera.

The system of any preceding clause, further comprising a light source to illuminate the build plane.

The system of any preceding clause, wherein the computing device is further configured to cause the light source to illuminate the build plane after receiving the powder applied signal; cause the light source to stop illuminating the build plane after receiving the weld on signal; and cause the light source to illuminate the build plane after receiving the weld off signal.

The system of any preceding clause, wherein the light source is a light-emitting diode.

The system of any preceding clause, wherein the camera comprises a tilt-shift lens.

The system of any preceding clause, wherein the adjustable attenuator comprises an electronically controlled optical attenuator.

The system of any preceding clause, wherein the adjustable attenuator comprises a filter wheel that can rotate different filters in front of a lens of the camera.

The system of any preceding clause, wherein the adjustable attenuator comprises an adjustable light polarizer.

An apparatus comprising one or more processors; memory comprising instructions that, when executed by the one or more processors, cause the apparatus to receive a powder applied signal from an additive manufacturing system indicating that a layer of particulate has been deposited onto a build plane; upon receiving the powder applied signal, cause an adjustable attenuator to adjust the attenuation level of a camera to a first attenuation level; receive a pre-weld image of the build plane captured by the camera after the attenuation level of the camera is set to the first attenuation level; receive a weld on signal from the additive manufacturing system indicating a start of exposure of a layer of a component on the build plane to an energy beam; upon receiving the weld on signal, cause the adjustable attenuator to adjust the attenuation level of the camera to a second attenuation level, the second attenuation level having a higher attenuation than the first attenuation level; receive at least one in-weld image of the build plane captured by the camera after the attenuation level of the camera is set to the second attenuation level; receive a weld off signal from the apparatus indicating an end of exposure of the layer of the component on the build plane to the energy beam; upon receiving the weld off signal, cause the adjustable attenuator to adjust the attenuation level of the camera to a third attenuation level, the third attenuation level having a lower attenuation than the second attenuation level; and receive a post-weld image of the build plane captured by the camera after the attenuation level of the camera is set to the third attenuation level.

The apparatus of any preceding clause, wherein the camera is a complementary metal-oxide-semiconductor (CMOS) camera.

The apparatus of any preceding clause, wherein the instructions further cause the apparatus to cause a light source to illuminate the build plane after receiving the powder applied signal; cause the light source to stop illuminating the build plane after receiving the weld on signal; and cause the light source to illuminate the build plane after receiving the weld off signal.

The apparatus of any preceding clause, wherein the light source is a light-emitting diode.

The apparatus of any preceding clause, wherein the adjustable attenuator comprises an electronically controlled optical attenuator.

The apparatus of any preceding clause, wherein the adjustable attenuator comprises a filter wheel that can rotate different filters in front of a lens of the camera.

The apparatus of any preceding clause, wherein the adjustable attenuator comprises an adjustable light polarizer.

A method comprising receiving a powder applied signal from an additive manufacturing system indicating that a layer of particulate has been deposited onto a build plane; upon receiving the powder applied signal, causing an adjustable attenuator to adjust the attenuation level of a camera to a first attenuation level; receiving a pre-weld image of the build plane captured by the camera after the attenuation level of the camera is set to the first attenuation level; receiving a weld on signal from the additive manufacturing system indicating a start of exposure of a layer of a component on the build plane to an energy beam; upon receiving the weld on signal, causing the adjustable attenuator to adjust the attenuation level of the camera to a second attenuation level, the second attenuation level having a higher attenuation than the first attenuation level; receiving at least one in-weld image of the build plane captured by the camera after the attenuation level of the camera is set to the second attenuation level; receiving a weld off signal from the apparatus indicating an end of exposure of the layer of the component on the build plane to the energy beam; upon receiving the weld off signal, causing the adjustable attenuator to adjust the attenuation level of the camera to a third attenuation level, the third attenuation level having a lower attenuation than the second attenuation level; and receiving a post-weld image of the build plane captured by the camera after the attenuation level of the camera is set to the third attenuation level.

The method of any preceding clause, wherein the camera is a complementary metal-oxide-semiconductor (CMOS) camera.

The method of any preceding clause, further comprising causing a light source to illuminate the build plane after receiving the powder applied signal; causing the light source to stop illuminating the build plane after receiving the weld on signal; and causing the light source to illuminate the build plane after receiving the weld off signal.

The method of any preceding clause, wherein the light source is a light-emitting diode.

The method of any preceding clause, wherein the adjustable attenuator comprises an electronically controlled optical attenuator.

The method of any preceding clause, wherein the adjustable attenuator comprises a filter wheel that can rotate different filters in front of a lens of the camera.

The method of any preceding clause, wherein the adjustable attenuator comprises an adjustable light polarizer.

A system comprising an apparatus for building a component by additive manufacturing using an energy beam, the apparatus comprising a build plane on which the component is built; a camera having a line of sight on the build plane; and a computing device configured to receive a plurality of images of a particulate on a build plane of an additive manufacturing system captured by a camera while one layer of the particulate is exposed to an energy beam of the additive manufacturing system; and combine the plurality of images to generate and image of a melt pool trajectory of the one layer of the particulate.

The system of any preceding claim, wherein the computing device is further configured to combine the plurality of images by summing the pixel values from each of the plurality of images.

The system of any preceding claim, wherein the computing device is further configured to combine the plurality of images by taking a maximum value of each pixel among the plurality of images.

The system of any preceding claim, wherein the computing device is further configured to receive a signal from the additive manufacturing system indicating a start of exposure of the particulate to the energy beam; and begin capturing the plurality of images after receiving the signal from the additive manufacturing system.

The system of any preceding claim, wherein the computing device is further configured to receive a signal from the additive manufacturing system indicating an end of exposure of the particulate to the energy beam; and stop capturing the plurality of images after receiving the signal from the additive manufacturing system.

The system of any preceding claim, wherein the computing device is further configured to create a gap between capturing each of the plurality of images.

The system of any preceding claim, wherein a length of time of the gap is less than an amount of time it takes the energy beam to move a distance equal to a dimension of the melt pool.

The system of any preceding claim, wherein the computing device is further configured to set pixel values for each pixel of the plurality of images having a value less than a predetermined threshold to zero.

The system of any preceding claim, wherein the predetermined threshold is greater than or equal to a distribution of noise associated with a camera the captures the plurality of images.

The system of any preceding claim, wherein the camera is a complementary metal-oxide-semiconductor (CMOS) camera.

A system, comprising an apparatus for building a component by additive manufacturing using an energy beam, the apparatus comprising a build plane on which the component is built; a camera having a line of sight on the build plane; and a computing device. The computing device being configured to receive an image of the build plane captured by the camera, the image including at least one fiducial marker positioned on the build plane; identify coordinates of the at least one fiducial marker in the image in a coordinate system of the camera; identify coordinates of the at least one fiducial marker in a coordinate system of the apparatus; generate an image transfer function in accordance with the identified coordinates of the at least one fiducial marker in the coordinate system of the camera and the identified coordinates of the at least one fiducial marker in the coordinate system of the apparatus; and generate a distortion-corrected image by application of the image transfer function to the image.

The system of any preceding clause, wherein the camera is a complementary metal-oxide-semiconductor (CMOS) camera, a charged-coupled device camera, an electron-multiplying charge-coupled device camera, or a back-illuminated CMOS camera.

The system of any preceding clause, wherein the computing device is further configured to receive at least one subsequent image of the build plane captured by the camera, the image including at least one component positioned on the build plane; apply the image transfer function to the at least one subsequent image to generate at least one subsequent distortion-corrected image; and analyze the at least one subsequent distortion-corrected image to identify at least one anomaly of the at least one component.

The system of any preceding clause, wherein the image of the build plane captured by the camera is at least one of a pre-weld image, an in-weld image, or a post-weld image.

The system of any preceding clause, wherein the camera is positioned off-axis relative to the build plane.

The system of any preceding clause, wherein the computing device is further configured to identify a set of center coordinates of the at least one fiducial marker in the received image.

The system of any preceding clause, wherein the at least one fiducial marker corresponds to the component on the build plane.

The system of any preceding clause, wherein the image transfer function converts coordinates in the coordinate system of the camera and into coordinates in the coordinate system of the apparatus.

An apparatus, comprising one or more processors; and non-transitory memory comprising machine-readable instructions that, when executed by the one or more processors, cause the apparatus to: receive an image of a build plane captured by a camera, the image including at least one fiducial marker positioned on the build plane; identify coordinates of the at least one fiducial marker in the image in a coordinate system of the camera; identify coordinates of the at least one fiducial marker in a coordinate system of the apparatus; generate an image transfer function in accordance with the identified coordinates of the at least one fiducial marker in the coordinate system of the camera and the identified coordinates of the at least one fiducial marker in the coordinate system of the apparatus; and generate a distortion-corrected image by application of the image transfer function to the image.

The apparatus of any preceding clause, wherein the camera is a complementary metal-oxide-semiconductor (CMOS) camera, a charged-coupled device camera, an electron-multiplying charge-coupled device camera, or a back-illuminated CMOS camera.

The apparatus of any preceding clause, wherein the machine-readable instructions further cause the apparatus to receive at least one subsequent image of the build plane captured by the camera, the image including at least one component positioned on the build plane; apply the image transfer function to the at least one subsequent image to generate at least one subsequent distortion-corrected image; and analyze the at least one subsequent distortion-corrected image to identify at least one anomaly of the at least one component.

The apparatus of any preceding clause, wherein the image of the build plane captured by the camera is at least one of a pre-weld image, an in-weld image, or a post-weld image.

The apparatus of any preceding clause, wherein the camera is positioned off-axis relative to the build plane.

The apparatus of any preceding clause, wherein the machine-readable instructions further cause the apparatus to identify a set of center coordinates of the at least one fiducial marker in the received image.

The apparatus of any preceding clause, wherein the at least one fiducial marker corresponds to the component on the build plane.

The apparatus of any preceding clause, wherein the image transfer function converts coordinates in the coordinate system of the camera and into coordinates in the coordinate system of the apparatus.

A method, comprising receiving an image of a build plane of an additive manufacturing system captured by a camera, the image including at least one fiducial marker positioned on the build plane; identifying coordinates of the at least one fiducial marker in the image in a coordinate system of the camera; identifying coordinates of the at least one fiducial marker in a coordinate system of the additive manufacturing system; generating an image transfer function in accordance with the identified coordinates of the at least one fiducial marker in the coordinate system of the camera and the identified coordinates of the at least one fiducial marker in the coordinate system of the additive manufacturing system; and generating a distortion-corrected image by application of the image transfer function to the image.

The method of any preceding clause, further comprising receiving at least one subsequent image of the build plane captured by the camera, the image including at least one component positioned on the build plane; applying the image transfer function to the at least one subsequent image to generate at least one subsequent distortion-corrected image; and analyzing the at least one subsequent distortion-corrected image to identify at least one anomaly of the at least one component.

The method of any preceding clause, wherein the image of the build plane captured by the camera is at least one of a pre-weld image, an in-weld image, or a post-weld image.

The method of any preceding clause, wherein the image transfer function converts coordinates in the coordinate system of the camera and into coordinates in the coordinate system of the additive manufacturing system.

A system, comprising an apparatus for building a component by additive manufacturing using an energy beam, the apparatus comprising a build plane on which the component is built; a camera having a line of sight on the build plane; and a computing device configured to receive an image of the build plane captured by the camera, the image including at least one fiducial marker positioned on the build plane; rectify the image in accordance with an image transfer function to generate a distortion-corrected image; identify coordinates of the at least one fiducial marker in the distortion-corrected image; compare identified coordinates of the at least one fiducial marker from the distortion-corrected image with corresponding nominal coordinates of the at least one fiducial marker in a coordinate system of the apparatus; generate a coordinate transfer function in accordance with a result of the comparison of the identified coordinates of the at least one fiducial marker from the distortion-corrected image and the nominal coordinates of the at least one fiducial marker in the coordinate system of the apparatus; and apply the coordinate transfer function to the apparatus to calibrate a position of the energy beam on the build plane.

The system of any preceding clause, wherein the image of the build plane captured by the camera is at least one of a pre-weld image, an in-weld image, or a post-weld image.

The system of any preceding clause, wherein the computing device is further figured to calculate a deviation between the identified coordinates of the at least one fiducial marker from the distortion-corrected image and the corresponding nominal coordinates of the at least one fiducial marker in the coordinate system of the apparatus, wherein the coordinate transfer function correlates the coordinates of the at least one fiducial marker from the distortion-corrected image with the corresponding nominal coordinates of the at least one fiducial marker in the coordinate system of the apparatus to correct the calculated deviation.

The system of any preceding clause, wherein the computing device is further configured to cause the energy beam to form the at least one fiducial marker on the build plane in accordance with the nominal coordinates of the at least one fiducial marker in the coordinate system of the apparatus.

The system of any preceding clause, wherein the camera is a complementary metal-oxide-semiconductor (CMOS) camera, a charge-coupled device camera, an electron-multiplying charge-coupled device camera, or a back-illuminated CMOS camera.

The system of any preceding clause, wherein the energy beam comprises a first energy beam and a second energy beam, the computing device further configured to receive an image of the build plane captured by the camera, the image including at least one fiducial marker associated with the first energy beam and at least one fiducial marker associated with the second energy beam positioned on the build plane; rectify the image in accordance with an image transfer function to generate a distortion-corrected image; identify coordinates of the at least one fiducial marker associated with the first energy beam and the at least one fiducial marker associated with the second energy beam in the distortion-corrected image; compare identified coordinates of the at least one fiducial marker associated with the first energy beam and the at least one fiducial marker associated with the second energy beam from the distortion-corrected image with corresponding nominal coordinates of the at least one fiducial marker associated with the first energy beam and the at least one fiducial marker associated with the second energy beam in a coordinate system of the apparatus; generate the coordinate transfer function in accordance with a result of the comparison of the identified coordinates of the at least one fiducial marker associated with the first energy beam and the at least one fiducial marker associated with the second energy beam from the distortion-corrected image and the nominal coordinates of the at least one fiducial marker associated with the first energy beam and the at least one fiducial marker associated with the second energy beam in the coordinate system of the apparatus; and apply the coordinate transfer function to the apparatus to calibrate a position of the first energy beam and the second energy beam on the build plane.

The system of any preceding clause, wherein the computing device is further configured to identify a set of center coordinates of the at least one fiducial marker in the distortion-corrected image.

The system of any preceding clause, wherein the at least one fiducial marker corresponds to the component on the build plane.

An apparatus, comprising one or more processors; and non-transitory memory comprising machine-readable instructions that, when executed by the one or more processors, cause the apparatus to receive an image of a build plane captured by a camera, the image including at least one fiducial marker positioned on the build plane; rectify the image in accordance with an image transfer function to generate a distortion-corrected image; identify coordinates of the at least one fiducial marker in the distortion-corrected image; compare identified coordinates of the at least one fiducial marker from the distortion-corrected image with corresponding nominal coordinates of the at least one fiducial marker in a coordinate system of the apparatus; generate a coordinate transfer function in accordance with a result of the comparison of the identified coordinates of the at least one fiducial marker from the distortion-corrected image and the nominal coordinates of the at least one fiducial marker in the coordinate system of the apparatus; and apply the coordinate transfer function to the apparatus to calibrate a position of an energy beam on the build plane.

The apparatus of any preceding clause, wherein the image of the build plane captured by the camera is at least one of a pre-weld image, an in-weld image, or a post-weld image.

The apparatus of any preceding clause, wherein the instructions further cause the apparatus to calculate a deviation between the identified coordinates of the at least one fiducial marker from the distortion-corrected image and the corresponding nominal coordinates of the at least one fiducial marker in the coordinate system of the apparatus, wherein the coordinate transfer function correlates the coordinates of the at least one fiducial marker from the distortion-corrected image with the corresponding nominal coordinates of the at least one fiducial marker in the coordinate system of the apparatus to correct the calculated deviation.

The apparatus of any preceding clause, wherein the instructions further cause the apparatus to cause the energy beam to form the at least one fiducial marker on the build plane in accordance with the nominal coordinates of the at least one fiducial marker in the coordinate system of the apparatus.

The apparatus of any preceding clause, wherein the camera is a complementary metal-oxide-semiconductor (CMOS) camera, a charge-coupled device camera, an electron-multiplying charge-coupled device camera, or a back-illuminated CMOS camera.

The apparatus of any preceding clause, wherein the energy beam comprises a first energy beam and a second energy beam, the instructions further cause the apparatus to receive an image of the build plane captured by the camera, the image including at least one fiducial marker associated with the first energy beam and at least one fiducial marker associated with the second energy beam positioned on the build plane; rectify the image in accordance with an image transfer function to generate a distortion-corrected image; identify coordinates of the at least one fiducial marker associated with the first energy beam and the at least one fiducial marker associated with the second energy beam in the distortion-corrected image; compare identified coordinates of the at least one fiducial marker associated with the first energy beam and the at least one fiducial marker associated with the second energy beam from the distortion-corrected image with corresponding nominal coordinates of the at least one fiducial marker associated with the first energy beam and the at least one fiducial marker associated with the second energy beam in a coordinate system of the apparatus; generate the coordinate transfer function in accordance with a result of the comparison of the identified coordinates of the at least one fiducial marker associated with the first energy beam and the at least one fiducial marker associated with the second energy beam from the distortion-corrected image and the nominal coordinates of the at least one fiducial marker associated with the first energy beam and the at least one fiducial marker associated with the second energy beam in the coordinate system of the apparatus; and apply the coordinate transfer function to the apparatus to calibrate a position of the first energy beam and the second energy beam on the build plane.

The apparatus of any preceding clause, wherein the instructions further cause the apparatus to identify a set of center coordinates of the at least one fiducial marker in the distortion-corrected image.

The apparatus of any preceding clause, wherein the at least one fiducial marker corresponds to the component on the build plane.

A method, comprising receiving an image of a build plane of an additive manufacturing apparatus captured by a camera, the image including at least one fiducial marker positioned on the build plane; rectifying the image in accordance with an image transfer function to generate a distortion-corrected image; identifying coordinates of the at least one fiducial marker in the distortion-corrected image; comparing identified coordinates of the at least one fiducial marker from the distortion-corrected image with corresponding nominal coordinates of the at least one fiducial marker in a coordinate system of the apparatus; generating a coordinate transfer function in accordance with a result of the comparison of the identified coordinates of the at least one fiducial marker from the distortion-corrected image and the nominal coordinates of the at least one fiducial marker in the coordinate system of the apparatus; and applying the coordinate transfer function to the apparatus to calibrate a position of an energy beam on the build plane.

The method of any preceding clause, further comprising calculating a deviation between the identified coordinates of the at least one fiducial marker from the distortion-corrected image and the corresponding nominal coordinates of the at least one fiducial marker in the coordinate system of the apparatus, wherein the coordinate transfer function correlates the coordinates of the at least one fiducial marker from the distortion-corrected image with the corresponding nominal coordinates of the at least one fiducial marker in the coordinate system of the apparatus to correct the calculated deviation.

The method of any preceding clause, further comprising causing the energy beam to form the at least one fiducial marker on the build plane in accordance with the nominal coordinates of the at least one fiducial marker in the coordinate system of the apparatus.

The method of any preceding clause, wherein the energy beam comprises a first energy beam and a second energy beam, further comprising receiving an image of the build plane captured by the camera, the image including at least one fiducial marker associated with the first energy beam and at least one fiducial marker associated with the second energy beam positioned on the build plane; rectifying the image in accordance with an image transfer function to generate a distortion-corrected image; identifying coordinates of the at least one fiducial marker associated with the first energy beam and the at least one fiducial marker associated with the second energy beam in the distortion-corrected image; comparing identified coordinates of the at least one fiducial marker associated with the first energy beam and the at least one fiducial marker associated with the second energy beam from the distortion-corrected image with corresponding nominal coordinates of the at least one fiducial marker associated with the first energy beam and the at least one fiducial marker associated with the second energy beam in a coordinate system of the apparatus; generating the coordinate transfer function in accordance with a result of the comparison of the identified coordinates of the at least one fiducial marker associated with the first energy beam and the at least one fiducial marker associated with the second energy beam from the distortion-corrected image and the nominal coordinates of the at least one fiducial marker associated with the first energy beam and the at least one fiducial marker associated with the second energy beam in the coordinate system of the apparatus; and applying the coordinate transfer function to the apparatus to calibrate a position of the first energy beam and the second energy beam on the build plane.

A system, comprising an apparatus for building a component by additive manufacturing using an energy beam, the apparatus comprising a build plane on which the component is built; at least one first camera having a first field of view of the build plane; at least one second camera having a second field of view of the build plane; and a computing device configured to receive a first image of the build plane captured by the at least one first camera, the first image including at least one fiducial marker positioned on the build plane within an overlap region; receive a second image of the build plane captured by the at least one second camera, the second image including at least one fiducial marker positioned on the build plane within the overlap region; identify coordinates of the at least one fiducial marker in the first image within the overlap region; identify coordinates of the at least one fiducial marker in the second image the overlap region; and combine the first image and the second image to form a merged image in accordance with the identified coordinates of the at least one fiducial marker in the first image and the identified coordinates of the at least one fiducial marker in the second image.

The system of any preceding clause, wherein the computing device is further configured to analyze the merged image to detect at least one anomaly in the component; and generate an alert in response to a detected at least one anomaly in the component.

The system of any preceding clause, wherein the computing device is further configured to rectify the first image of the build plane captured by the at least one first camera in accordance with an image transfer function to generate a first distortion-corrected image; and rectify the second image of the build plane captured by the at least one second camera in accordance with an image transfer function to generate a second distortion-corrected image, wherein the first distortion-corrected image and the second distortion-corrected image are combined to form the merged image.

The system of any preceding clause, wherein the computing device is further configured to identify a set of center coordinates of the at least one fiducial marker in the first distortion-corrected image and a set of center coordinates of the at least one fiducial marker in the second distortion-corrected image.

The system of any preceding clause, wherein at least one of the first image or the second image of the build plane respectively captured by the at least one first camera or the at least one second camera is at least one of a pre-weld image, an in-weld image, or a post-weld image.

The system of any preceding clause, wherein the computing device is further configured to equalize an intensity of the first image and an intensity of the second image prior to forming the merged image.

The system of any preceding clause, further comprising a plurality of cameras having a corresponding plurality of fields of view of the build plane; wherein the computing device is further configured to receive a plurality of images of the plurality of fields of view of the build plane captured by respective ones of the plurality of cameras, each of the plurality of images including at least one fiducial marker positioned on the build plane within an overlap region; identify coordinates of the at least one fiducial marker in each of the received plurality of images within the overlap region; and combine the plurality of images to form the merged image in accordance with the identified coordinates of the at least one fiducial marker in each of received plurality of images within the overlap region.

The system of any preceding clause, wherein the computing device is further configured to analyze the merged image to detect at least one anomaly in the component; and generate an alert in response to a detected at least one anomaly in the component.

The system of any preceding clause, wherein the computing device is further configured to rectify the image of the build plane captured by each of the plurality of cameras in accordance with an image transfer function to generate a corresponding plurality of distortion-corrected images; wherein the plurality of distortion-corrected images are combined to form the merged image.

An apparatus, comprising one or more processors; and non-transitory memory comprising machine-readable instructions that, when executed by the one or more processors, cause the apparatus to receive a first image of a build plane captured by at least one first camera having a first field of view, the first image including at least one fiducial marker positioned on the build plane within an overlap region; receive a second image of the build plane captured by at least one second camera having a second field of view, the second image including at least one fiducial marker positioned on the build plane within the overlap region; identify coordinates of the at least one fiducial marker in the first image within the overlap region; identify coordinates of the at least one fiducial marker in the second image the overlap region; and combine the first image and the second image to form a merged image in accordance with the identified coordinates of the at least one fiducial marker in the first image and the identified coordinates of the at least one fiducial marker in the second image.

The apparatus of any preceding clause, wherein the machine-readable instructions further cause the apparatus to analyze the merged image to detect at least one anomaly in a component; and generate an alert in response to a detected at least one anomaly in the component.

The apparatus of any preceding clause, wherein the machine-readable instructions further cause the apparatus to rectify the first image of the build plane captured by the at least one first camera in accordance with an image transfer function to generate a first distortion-corrected image; and rectify the second image of the build plane captured by the at least one second camera in accordance with an image transfer function to generate a second distortion-corrected image, wherein the first distortion-corrected image and the second distortion-corrected image are combined to form the merged image.

The apparatus of any preceding clause, wherein at least one of the first image or the second image of the build plane respectively captured by the at least one first camera or the at least one second camera is at least one of a pre-weld image, an in-weld image, or a post-weld image.

The apparatus of any preceding clause, wherein the machine-readable instructions further cause the apparatus to equalize an intensity of the first image and an intensity of the second image prior to forming the merged image.

The apparatus of any preceding clause, further comprising a plurality of cameras having a corresponding plurality of fields of view of the build plane; wherein the machine-readable instructions further cause the apparatus to receive a plurality of images of the plurality of fields of view of the build plane captured by respective ones of the plurality of cameras, each of the plurality of images including at least one fiducial marker positioned on the build plane within an overlap region; identify coordinates of the at least one fiducial marker in each of the received plurality of images within the overlap region; and combine the plurality of images to form the merged image in accordance with the identified coordinates of the at least one fiducial marker in each of received plurality of images within the overlap region.

The apparatus of any preceding clause, wherein the machine-readable instructions further cause the apparatus to analyze the merged image to detect at least one anomaly in a component; and generate an alert in response to a detected at least one anomaly in the component.

The apparatus of any preceding clause, wherein the machine-readable instructions further cause the apparatus to rectify the image of the build plane captured by each of the plurality of cameras in accordance with an image transfer function to generate a corresponding plurality of distortion-corrected images, wherein the plurality of distortion-corrected images are combined to form the merged image.

A method, comprising receiving a first image of a build plane captured by at least one first camera having a first field of view, the first image including at least one fiducial marker positioned on the build plane within an overlap region; receiving a second image of the build plane captured by at least one second camera having a second field of view, the second image including at least one fiducial marker positioned on the build plane within the overlap region; identifying coordinates of the at least one fiducial marker in the first image within the overlap region; identifying coordinates of the at least one fiducial marker in the second image the overlap region; combining the first image and the second image to form a merged image in accordance with the identified coordinates of the at least one fiducial marker in the first image and the identified coordinates of the at least one fiducial marker in the second image; analyzing the merged image to detect at least one anomaly in a component; and generating an alert in response to a detected at least one anomaly in the component.

The method of any preceding clause, further comprising rectifying the first image of the build plane captured by the at least one first camera in accordance with an image transfer function to generate a first distortion-corrected image; and rectifying the second image of the build plane captured by the at least one second camera in accordance with an image transfer function to generate a second distortion-corrected image, wherein the first distortion-corrected image and the second distortion-corrected image are combined to form the merged image.

The method of any preceding clause, further comprising receiving a plurality of images of a plurality of fields of view of the build plane captured by respective ones of a plurality of cameras, each of the plurality of images including at least one fiducial marker positioned on the build plane within an overlap region; identify coordinates of the at least one fiducial marker in each of the received plurality of images within the overlap region; and combine the plurality of images to form the merged image in accordance with the identified coordinates of the at least one fiducial marker in each of received plurality of images within the overlap region.

## Claims

1. An apparatus (130), comprising:
one or more processors (154); and
non-transitory memory (158) comprising machine-readable instructions that, when executed by the one or more processors, cause the apparatus to:
receive an image (600) of a build plane (112) captured by a camera (136), the image (600) including at least one fiducial marker (602) positioned on the build plane (112);
rectify the image (600) in accordance with an image transfer function to generate a distortion-corrected image (604);
identify coordinates of the at least one fiducial marker (602) in the distortion-corrected image (604);
compare identified coordinates of the at least one fiducial marker (602) from the distortion-corrected image (604) with corresponding nominal coordinates of the at least one fiducial marker (602) in a coordinate system of the apparatus (130);
generate a coordinate transfer function in accordance with a result of the comparison of the identified coordinates of the at least one fiducial marker (602) from the distortion-corrected image (604) and the nominal coordinates of the at least one fiducial marker (602) in the coordinate system of the apparatus (130); and
apply the coordinate transfer function to the apparatus (130) to calibrate a position of an energy beam (132) on the build plane (112).

2. The apparatus (130) according to claim 1, wherein the image (600) of the build plane (112) captured by the camera (136) is at least one of a pre-weld image, an in-weld image, or a post-weld image.

3. The apparatus (130) according to one of claim 1 or claim 2, wherein the machine-readable instructions further cause the apparatus (130) to:
calculate a deviation between the identified coordinates of the at least one fiducial marker (602) from the distortion-corrected image (604) and the corresponding nominal coordinates of the at least one fiducial marker (602) in the coordinate system of the apparatus (130),
wherein the coordinate transfer function correlates the coordinates of the at least one fiducial marker (602) from the distortion-corrected image (604) with the corresponding nominal coordinates of the at least one fiducial marker (602) in the coordinate system of the apparatus (130) to correct the calculated deviation.

4. The apparatus (130) according to any one of the preceding claims, wherein the machine-readable instructions further cause the apparatus (130) to:
cause the energy beam (132) to form the at least one fiducial marker (602) on the build plane (112) in accordance with the nominal coordinates of the at least one fiducial marker (602) in the coordinate system of the apparatus (130).

5. The apparatus (130) according to any one of the preceding claims, wherein the energy beam (132) comprises a first energy beam and a second energy beam, the machine-readable instructions further cause the apparatus (130) to:
receive an image (600) of the build plane captured by the camera (136), the image (600) including at least one fiducial marker (602) associated with the first energy beam and at least one fiducial marker (602) associated with the second energy beam positioned on the build plane (112);
rectify the image (600) in accordance with an image transfer function to generate the distortion-corrected image (604);
identify coordinates of the at least one fiducial marker (602) associated with the first energy beam and the at least one fiducial marker (602) associated with the second energy beam in the distortion-corrected image (604);
compare identified coordinates of the at least one fiducial marker (602) associated with the first energy beam and the at least one fiducial marker (602) associated with the second energy beam from the distortion-corrected image (604) with corresponding nominal coordinates of the at least one fiducial marker (602) associated with the first energy beam and the at least one fiducial marker (602) associated with the second energy beam in the coordinate system of the apparatus (130);
generate the coordinate transfer function in accordance with the result of the comparison of the identified coordinates of the at least one fiducial marker (602) associated with the first energy beam and the at least one fiducial marker (602) associated with the second energy beam from the distortion-corrected image (604) and the nominal coordinates of the at least one fiducial marker (602) associated with the first energy beam and the at least one fiducial marker (602) associated with the second energy beam in the coordinate system of the apparatus (130); and
apply the coordinate transfer function to the apparatus (130) to calibrate a position of the first energy beam and the second energy beam on the build plane (112).

6. The apparatus (130) according to any one of the preceding claims, wherein the machine-readable instructions further cause the apparatus (130) to identify a set of center coordinates of the at least one fiducial marker (602) in the distortion-corrected image (604).

7. The apparatus (130) according to any one of the preceding claims, wherein the at least one fiducial marker (602) corresponds to a component (134) on the build plane (112).

8. A system (100), comprising:
the apparatus (130) according to any one of the preceding claims, the apparatus (130) comprising the build plane (112) on which a component (134) is built; and
the camera (136) having a line of sight on the build plane (112).

9. The system (100) according to claim 8, wherein the camera (136) is a complementary metal-oxide-semiconductor (CMOS) camera, a charge-coupled device camera, an electron-multiplying charge-coupled device camera, or a back-illuminated CMOS camera.

10. A method, comprising:
receiving an image of a build plane of an additive manufacturing apparatus captured by a camera, the image including at least one fiducial marker positioned on the build plane;
rectifying the image in accordance with an image transfer function to generate a distortion-corrected image;
identifying coordinates of the at least one fiducial marker in the distortion-corrected image;
comparing identified coordinates of the at least one fiducial marker from the distortion-corrected image with corresponding nominal coordinates of the at least one fiducial marker in a coordinate system of the apparatus;
generating a coordinate transfer function in accordance with a result of the comparison of the identified coordinates of the at least one fiducial marker from the distortion-corrected image and the nominal coordinates of the at least one fiducial marker in the coordinate system of the apparatus; and
applying the coordinate transfer function to the apparatus to calibrate a position of an energy beam on the build plane.

11. The method according to claim 10, further comprising:
calculating a deviation between the identified coordinates of the at least one fiducial marker from the distortion-corrected image and the corresponding nominal coordinates of the at least one fiducial marker in the coordinate system of the apparatus,
wherein the coordinate transfer function correlates the coordinates of the at least one fiducial marker from the distortion-corrected image with the corresponding nominal coordinates of the at least one fiducial marker in the coordinate system of the apparatus to correct the calculated deviation.

12. The method according to claim 10, further comprising:
causing the energy beam to form the at least one fiducial marker on the build plane in accordance with the nominal coordinates of the at least one fiducial marker in the coordinate system of the apparatus.

13. The method according to claim 10, wherein the energy beam comprises a first energy beam and a second energy beam, further comprising:
receiving an image of the build plane captured by the camera, the image including at least one fiducial marker associated with the first energy beam and at least one fiducial marker associated with the second energy beam positioned on the build plane;
rectifying the image in accordance with an image transfer function to generate the distortion-corrected image;
identifying coordinates of the at least one fiducial marker associated with the first energy beam and the at least one fiducial marker associated with the second energy beam in the distortion-corrected image;
comparing identified coordinates of the at least one fiducial marker associated with the first energy beam and the at least one fiducial marker associated with the second energy beam from the distortion-corrected image with corresponding nominal coordinates of the at least one fiducial marker associated with the first energy beam and the at least one fiducial marker associated with the second energy beam in the coordinate system of the apparatus;
generating the coordinate transfer function in accordance with the result of the comparison of the identified coordinates of the at least one fiducial marker associated with the first energy beam and the at least one fiducial marker associated with the second energy beam from the distortion-corrected image and the nominal coordinates of the at least one fiducial marker associated with the first energy beam and the at least one fiducial marker associated with the second energy beam in the coordinate system of the apparatus; and
applying the coordinate transfer function to the apparatus to calibrate a position of the first energy beam and the second energy beam on the build plane.

14. The method according to claim 10, further comprising:
identifying a set of center coordinates of the at least one fiducial marker in the distortion-corrected image.
